(19) Europäisches Patentamt / European Patent Office / Office européen des brevets

(11) **EP 3 908 819 B1**

(12) **FASCICULE DE BREVET EUROPEEN**

(45) Date de publication et mention de la délivrance du brevet:
**03.07.2024 Bulletin 2024/27**

(21) Numéro de dépôt: **20705770.4**

(22) Date de dépôt: **07.01.2020**

(51) Classification Internationale des Brevets (IPC):
**G01M 9/06** *(2006.01)*     **G01M 10/00** *(2006.01)*
**G01M 17/02** *(2006.01)*     **G01P 5/20** *(2006.01)*

(52) Classification Coopérative des Brevets (CPC):
**G01M 10/00; G01M 9/067; G01M 17/027;**
**G01P 5/001; G01P 5/20**

(86) Numéro de dépôt international:
**PCT/FR2020/050019**

(87) Numéro de publication internationale:
**WO 2020/144429 (16.07.2020 Gazette 2020/29)**

(54) **DISPOSITIF ET PROCEDE DE MESURE DU CHAMP DE VITESSE DANS UNE NAPPE D'EAU**

VORRICHTUNG UND VERFAHREN ZUR MESSUNG DES GESCHWINDIGKEITSFELDES IN EINER WASSERSCHICHT

DEVICE AND METHOD FOR MEASURING THE VELOCITY FIELD IN A SHEET OF WATER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2019 FR 1900180**

(43) Date de publication de la demande:
**17.11.2021 Bulletin 2021/46**

(73) Titulaires:
• **COMPAGNIE GENERALE DES ETABLISSEMENTS MICHELIN**
  **63000 Clermont-Ferrand (FR)**
• **Ecole Centrale de Lyon**
  **69130 Ecully (FR)**
• **Institut National des Sciences Appliquees de Lyon (Insa Lyon)**
  **69100 Villeurbanne (FR)**
• **UNIVERSITE CLAUDE BERNARD - LYON 1**
  **69100 Villeurbanne (FR)**
• **Centre national de la recherche scientifique**
  **75016 Paris (FR)**

(72) Inventeurs:
• **TODOROFF, Violaine**
  **63040 Clermont-Ferrand Cedex 9 (FR)**
• **LEMAITRE, Jean**
  **63040 Clermont-Ferrand Cedex 9 (FR)**
• **LE-CHENADEC, Yohan**
  **63040 Clermont-Ferrand Cedex 9 (FR)**
• **BENIGUEL, Jean-François**
  **63040 Clermont-Ferrand Cedex 9 (FR)**
• **MICHARD, Marc**
  **63040 Clermont-Ferrand Cedex 9 (FR)**
• **SIMOENS, Serge**
  **63040 Clermont-Ferrand Cedex 9 (FR)**

(74) Mandataire: **M.F.P. Michelin**
  **DCJ/PI - F35 - Ladoux**
  **23 place des Carmes-Déchaux**
  **63040 Clermont-Ferrand Cedex 9 (FR)**

(56) Documents cités:
   JP-A- 2005 201 851     JP-A- 2016 099 195
   US-A- 4 095 464     US-A1- 2006 146 910

• **TADASHI SUZUKI ET AL: "Improvement of Hydroplaning Performance Based on Water Flow around Tires", SAE TECHNICAL PAPER SERIES SAE 2015-01-2027, vol. 1, 5 mars 2001 (2001-03-05), XP055644956, US ISSN: 0148-7191, DOI: 10.4271/2001-01-0753 cité dans la demande**

## Description

## Domaine de l'invention

La présente invention concerne un dispositif et un procédé de mesure du champ de vitesse dans une nappe d'eau au passage d'une enveloppe pneumatique roulant sur la nappe d'eau.

## Arrière-plan technologique

Pour le domaine de la performance de l'enveloppe pneumatique sur sol mouillé, la hauteur d'eau sur la trajectoire de l'enveloppe pneumatique montée sur un véhicule est un paramètre d'ordre un sur le niveau de performance en adhérence notamment lorsque les phénomènes d'hydroplanage apparaissent. Ces phénomènes d'hydroplanage sont accentués par la capacité d'évacuation de l'eau par la bande de roulement de l'enveloppe pneumatique au travers du schéma de creux de la bande de roulement constitué de sillons longitudinaux et/ou transversaux.

Bien entendu, en raison de l'usure de l'enveloppe pneumatique, ce schéma de creux est modifié ce qui impacte la performance d'hydroplanage de l'enveloppe pneumatique. De plus la comparaison entre divers pneumatiques présentant des volumes de creux différents dans la bande de roulement montre que la performance d'hydroplanage est fonction de la quantité de creux de la bande de roulement de l'enveloppe pneumatique. Cependant, bien que le volume global de vide du schéma de creux potentiellement offert par l'enveloppe pneumatique à l'échelle de la zone de contact avec le sol, appelée aire de contact, soit équivalent, la dynamique d'évacuation de l'eau située sur la trajectoire de l'enveloppe pneumatique se trouve modifiée par l'agencement des canaux du schéma de creux. De ce fait, l'analyse de la cinématique d'écoulement de l'eau dans le schéma de creux d'une enveloppe pneumatique est devenue prépondérante afin d'optimiser l'agencement des sillons de la bande de roulement d'une enveloppe pneumatique. Et ce d'autant plus que l'on recherche à réduire le volume disponible du schéma de creux afin d'optimiser le compromis entre les diverses performances de l'enveloppe pneumatique attendues par l'usager du véhicule de transport terrestre.

On connait dans l'état de la technique, au travers de l'article « Improvement of hydroplaning performance based on water flow around tires » publié lors du congrès mondial de la SAE ( en anglais « The engineering society for advancing Mobility land sea air and space) du 5 au 8 mars 2001 à Detroit dans le Michigan aux Etats Unis, un dispositif et un protocole de mesure du champ de vitesse dans la nappe d'eau située sur la trajectoire de l'enveloppe pneumatique. Le dispositif employant des particules disséminées dans la nappe d'eau permettant de déterminer le déplacement de ces particules dans la nappe d'eau au travers d'une caméra vidéo et d'un éclairage en volume de la zone d'observation.

Cependant, ce dispositif ne donne pas d'accès à l'écoulement d'eau dans le schéma de creux de l'enveloppe pneumatique, seulement une estimation de l'écoulement d'eau devant le pneumatique et dans la zone de soulèvement de l'enveloppe pneumatique générée par l'action du flux d'eau sur l'enveloppe pneumatique. Or la zone d'intérêt pour évaluer la performance de l'enveloppe pneumatique et en particulier l'efficacité de la performance sur sol mouillé est le schéma de creux de la bande de roulement de l'enveloppe pneumatique. Ainsi on recherche la mesure de l'écoulement d'eau dans ce schéma de creux et plus précisément à diverses altitudes dans la nappe d'eau ce que ne permet pas le dispositif employé dans cet article scientifique.

Les documents JP2005201851 A et US4095464 décrivent également des dispositifs de mesure d'un champ de vitesse dans une nappe d'eau mise en mouvement par le roulage d'un pneumatique.

La présente invention porte sur un système et un procédé de mesure du champ de vitesse dans une nappe d'eau mise en mouvement par le roulage de l'enveloppe pneumatique permettant d'obtenir le champ de vitesse au niveau du schéma de creux de la bande de roulement de l'enveloppe pneumatique.

## Description de l'invention

L'invention porte premièrement sur un système d'obtention du champ de vitesse dans une nappe d'eau au passage d'une enveloppe pneumatique, l'enveloppe étant en condition de roulage suivant une trajectoire, comprend un sommet ayant une bande de roulement dans un état chargé et gonflé en rotation autour d'un axe naturel de rotation, présentant sur sa surface externe au niveau de la bande de roulement un creux géométrique de dimension caractéristique L comprise entre 0,1 et 200 millimètres. Le système de mesure comprend:

- Une nappe d'eau d'épaisseur he comprise entre 1 et 8 millimètres, comprenant des particules, inertes chimiquement dans l'eau et de densité comprise à moins de 30% de la densité de l'eau dont le diamètre caractéristique est D ;

- Un hublot transparent situé sous la nappe d'eau présentant une première surface en contact avec la nappe d'eau, ayant une dimension caractéristique H1 supérieure à 200 millimètres et dont la surface plane moyenne présente une normale N, et une seconde surface dont la surface plane moyenne présente une normale N' faisant un angle à moins de $\alpha$ degrés par rapport à la normale N de la première surface, $\alpha$ étant inférieur à 60 degrés, préférentiellement 30 degrés, très préférentiellement 15 degrés ;

- Un dispositif optique comprenant une première partie comportant une source lumineuse, pouvant cor-

responde au point de départ d'un chemin optique de la lumière, et un générateur de nappe apte à générer une tranche surfacique de lumière dont le spectre lumineux s'étend sur une bande chromatique C1C2 ; et une seconde partie comprenant une première surface plane agencée pour recevoir la tranche surfacique de lumière et une seconde surface plane en contact avec la nappe d'eau agencée pour émettre une nappe plane de lumière apte à couvrir au moins une partie de la première surface du hublot, située en aval de la trajectoire de l'enveloppe ;

- Un dispositif de prise de vue situé sous le hublot, comprenant une zone photosensible à une bande chromatique C3C4, pouvant correspondre au point d'arrivée du chemin de la lumière, définissant une zone d'observation au niveau de la nappe d'eau permettant de prendre au moins deux clichés de la zone d'observation espacés d'une période T ;

- Un dispositif d'exposition à la lumière, situé sur le chemin optique de la lumière, pilotant un temps d'exposition TE de la zone photosensible du dispositif de prise de vue ;

- Un dispositif de synchronisation comprenant un moyen de détection du passage du pneumatique sur la trajectoire situé en amont de la trajectoire par rapport au hublot, un moyen de calcul apte à évaluer l'instant de l'arrivée de l'enveloppe pneumatique dans la zone d'observation en temps réel, et un moyen de communication pilotant le dispositif optique, le dispositif d'exposition et le dispositif de prise de vue ;

Le système de mesure est caractérisé en ce que les particules sont photoluminescentes ayant un spectre d'activation compris dans la bande chromatique C1C2 et un spectre d'émission dans la bande chromatique C3C4, les dites bandes chromatiques ne se recouvrant pas, en ce que le diamètre caractéristique D des particules est compris entre 1 micromètres et 100 micromètres, préférentiellement 10 à 50 micromètres, en ce que la concentration des particules dans l'eau est comprise entre de 2,5 et 250 gramme/m3 et en ce que le dispositif optique génère une nappe plane de lumière d'épaisseur ep inférieure ou égale à la hauteur he.

Ce système de mesure permet de réduire la zone d'observation potentielle de la nappe d'eau en se limitant à la nappe plane de lumière générée par le dispositif optique. De plus, les particules photoluminescentes facilitent une excitation sélective des particules. Et, ces particules ayant des spectres chromatiques d'activation et d'émission différenciés assurent que l'information recueillie par le dispositif de prise de vue est aussi sélective en n'observant que les particules activées et non pas, par exemple, la tranche de lumière excitatrice.

Enfin, la dimension D de ces particules permet d'assurer une mesure de qualité du champ de vitesse dans le creux de la bande de roulement de l'enveloppe pneumatique même pour les plus petites dimensions de L.

Pour être plus précis, souhaitant connaitre la champs de vitesses des particules pour évaluer l'impact des détails structuraux de la bande de roulement d'un pneumatique sur l'interaction avec l'eau présente sur la chaussée, il faut nécessairement étudier l'écoulement fluidique dans une fine épaisseur de la nappe d'eau, loin des bords où les conditions aux limites perturbent fortement l'écoulement fluidique. De plus, cette caractérisation expérimentale peut servir à la validation de modèle numérique d'un système couplée fluide/structure représentatifs d'une enveloppe pneumatique en rotation sur un sol en présence d'une nappe d'eau dans lequel l'interaction locale fluide/structure est encore mal connue. Ainsi il est difficile de figer les conditions aux limites au niveau des zones d'interaction fluide/structure de tel modèle numérique comme l'interface entre le sol et l'eau ou l'interface entre l'enveloppe pneumatique et l'eau. De ce fait, il est nécessaire d'éclairer une partie de la nappe d'eau sur une hauteur maitrisée loin de ces zones d'interface. Sinon, on éclaire l'ensemble de l'épaisseur de la nappe d'eau et de ce fait on obtiendrait une vitesse moyenne des particules dans la nappe d'eau qui serait perturbée par les effets de bords au niveau de la première surface du hublot et de la surface extérieure du schéma de creux de l'enveloppe pneumatique. De plus, on souhaite observer l'écoulement fluide dans le schéma de creux au niveau de l'aire de contact définie par l'écrasement de la bande de roulement sur la première surface du hublot. En effet seule l'analyse locale de l'écoulement de l'eau au niveau des creux permet de quantifier avec précision et sensibilité l'impact de la géométrie des détails de ce schéma de creux tels que des lamelles débouchantes, des angles de raccordement des entailles transversales dans les sillons longitudinaux, des hauteurs des pontages sur l'écoulement fluidique.

Enfin, le diamètre D des particules photoluminescentes et la concentration de celle-ci sont le résultat d'un compromis à identifier entre l'intensité de lumière réémise par les particules éclairées et la précision recherchée sur le champ de vitesse. En effet, la lumière réémise est propositionnelle au carré du diamètre des particules ainsi qu'à la concentration des particules dans l'eau. La sensibilité de la zone photosensible définit le niveau de lumière réémise nécessaire pour identifier un signal lors de la méthode du niveau de bruit De l'autre côté, l'écoulement fluidique que l'on cherche à observer correspond à un écoulement ayant une mise en mouvement violente, passant de l'arrêt à une vitesse de l'ordre de déplacement du véhicule. Il faut donc que les particules puissent suivre la chronologie de cet écoulement avec un temps de mise en mouvement extrêmement rapide. Or ce temps de mise en mouvement est proportionnel au carré du diamètre D de la particule selon la loi de Stockes. Plus la particule a un diamètre D grand, plus le temps de mise en mouvement est important. La gamme des diamètres D employés et leur concentration permet à la fois d'émettre suffisamment de lumière pour détecter le signal par rapport au niveau de bruit tout en ayant des particules qui suivent l'écoulement fluidique sans retard dans la gamme de vitesse visée. Des tailles de particules plus grandes, comme dans l'état de l'art, ne permettraient pas de suivre le vrai écoulement fluidique au sein du schéma de creux situé dans l'aire de contact. Une synergie forte existe entre la taille du diamètre D des particules et leur concentration dans le fluide ainsi que leur densité par rapport à l'eau pour arriver à visualiser le vrai écoulement fluidique de la nappe d'eau. En effet on cherche à évaluer par exemple la vitesse débitante au niveau du schéma de creux de l'aire de contact de l'enveloppe pneumatique pour estimer l'efficacité de détails géométriques localisés du schéma de creux.

De plus, la densité des particules dans l'eau permet de déterminer le déplacement de celles-ci et donc une meilleure précision sur le champ de vitesses des particules et par voie de conséquence de la nappe d'eau à l'échelle de l'épaisseur ep de la nappe surfacique de lumière.

Bien entendu, il faut que la période T entre les clichés du dispositif de prise de vue soit adaptée à la vitesse V du véhicule afin que les algorithmes de traitement d'images puissent évaluer le déplacement des particules émettrices. Tandis que le temps d'exposition TE du système assure une netteté des particules émettrices sur la zone photosensible du dispositif de prise de vue. Le temps d'exposition TE est un compromis entre la vitesse des particules fonction de la vitesse V du véhicule et de la résolution du dispositif de prise de vue.

De surcroit, le cliché est pris au travers d'un hublot transparent dont les première et seconde surfaces planes en contact avec l'eau et l'air présentent un certain parallélisme assurant une calibration du champ de déplacement de la zone d'observation permettant d'extraire le champ de vitesse. Bien entendu si les premières et secondes surfaces sont fortement tridimensionnelles, la lumière émise par les particules photoluminescentes se retrouve diffractée par la surface tridimensionnelle rendant quasi inexploitable le cliché de la zone d'observation.

Ce système expérimental ayant pour objectif d'évaluer la performance de l'enveloppe pneumatique en condition mouillée, il faut nécessairement que le système de mesure soit adapté pour des hauteurs d'eau au-dessus de la première surface plane du hublot comprise entre 1 et 8 millimètres pour des vitesses de roulage supérieur à 30 km/h à partir de laquelle des phénomènes hydrodynamiques apparaissent pour des enveloppes pneumatiques présentant un schéma de creux .

Enfin, comme il est préférable que l'on détermine les conditions de roulage de l'enveloppe pneumatique en particulier la vitesse au moment de la traversée de la zone d'observation ainsi que l'instant où cette traversée va commencer. Le système de mesure comprend un dispositif de synchronisation assurant de déclencher les divers dispositifs du système lors du passage de l'enveloppe pneumatique en mouvement avec le véhicule sur la zone d'observation et ce aussi bien pour des vitesses stabilisées que des accélérations stabilisées et pour des trajectoires linéaires ou courbes. Pour cela une détection du passage du pneumatique est effectuée en amont de la zone d'observation ce qui permet de mesurer la cinématique du pneumatique. L'obtention de cette cinématique permet l'évaluation de l'instant d'entrée du pneumatique dans la zone d'observation par rapport à sa trajectoire.

Selon un mode de réalisation préférentiel, la source lumineuse du dispositif optique est pulsée, fournissant une énergie minimale de 100 millijoules, de préférence 200mJ, très préférentiellement 400 millijoules, dans la bande chromatique C1C2 sur une durée TL.

Ainsi, l'énergie d'activation des particules photoluminescentes est concentrée sur une faible durée TL correspondant au pulse d'émission de la lumière du dispositif optique. Cette puissance émettrice sera l'asymptote de la puissance réceptionnée par le dispositif de prise de vue. En effet, seulement une partie de cette lumière émettrice sera captée par les particules photoluminescentes, l'autre partie traversera simplement la nappe d'eau. Ensuite, bien que la particule de diamètre caractéristique D soit activée, le dispositif de prise de vue ne visualisera qu'une partie de la géométrie de la particule et de ce fait qu'une partie de la lumière émise par cette particule. Enfin, le rendement de la photoluminescente, par exemple celui de la fluorescence, n'est pas égal à 1, la particule ne restituera donc pas la totalité de l'énergie reçue par le dispositif optique. De ce fait, il faut une certaine quantité d'énergie d'activation pour recueillir une énergie suffisante afin de contrebalancer tous ces facteurs dissipatifs.

Préférentiellement, la source lumineuse pulsée emploie une technologie comprise dans le groupe comprenant laser et lampe flash.

En raison de la valeur d'énergie émettrice et des faibles durée TL d'émission, il est préférable d'employer des lampes flashs ou des lasers. Ces seconds éléments ayant en plus l'avantage d'émettre de la lumière monochromatique concentrant encore d'avantage l'énergie sur la bande chromatique C1C2 reçue par les particules photoluminescentes.

Très préférentiellement, le dispositif optique comprend un filtre optique filtrant au moins sur la bande chromatique C3C4.

Dans le cas particulier où la lumière émettrice du dispositif optique est polychromatique, il convient de filtrer la bande C3C4 correspondant à la bande chromatique efficace du dispositif de prise de vue pour la supprimer des longueurs d'ondes d'émission. Cependant, dans tous les cas, le cliché obtenu par le dispositif de prise de vue ne doit pas être pollué par la lumière émettrice du dispositif optique de plus haut niveau énergétique, l'utilisation d'un filtre au niveau du dispositif de prise de vue est donc indispensable pour ne garder que la bande C3C4.

Selon un mode de réalisation avantageux, le dispositif optique comprend un générateur de nappe lumineuse plane comprenant une lentille cylindrique divergente et une lentille sphérique

Ce dispositif optique standard est peu onéreux. Le rendement énergétique est efficace entre la source de lumière et la tranche surfacique de lumière émise permettant de limiter l'énergie de la source de lumière pulsée du dispositif optique. La lentille cylindrique divergente permet d'élargir le faisceau de lumière émise par la source de lumière. La lentille sphérique permet de minimiser l'épaisseur de la tranche surfacique de lumière générée.

Préférentiellement, le dispositif optique comprend des miroirs permettant de renvoyer la nappe lumineuse dans la zone d'intérêt.

Afin d'optimiser le rendement énergétique du dispositif optique, il est préférable de concentrer toute l'énergie du dispositif optique dans la zone d'observation. Les miroirs permettent aussi d'optimiser l'espace nécessaire au dispositif optique.

Selon un autre mode de réalisation spécifique, le dispositif de prise de vue est situé perpendiculaire à la première surface du hublot.

Cette position permet de calculer le champ de vitesse sans phase de calibration métrique du cliché. Cela augmente aussi la zone d'observation de la nappe d'eau éclairée par les particules photoluminescentes ce qui améliore la quantité de lumière reçue par le dispositif de prise de vue.

Préférentiellement, la période T entre deux clichés consécutifs de la zone d'observation par le dispositif de prise de vue est comprise entre 20 et 500 microsecondes.

La période entre les deux clichés détermine le déplacement possible de la particule photoluminescente émettrice entre les deux clichés. Cette distance métrique doit être suffisante vis-à-vis de la résolution du dispositif de prise de vue afin que la particule puisse changer de zone active sous l'effet de la vitesse de déplacement de la particule. En raison de la gamme de vitesse V de roulage du véhicule couvert par le système de mesure et de la zone d'observation choisie, cette période est nécessairement large.

Très préférentiellement, le dispositif de prise de vue a une résolution d'au moins 1 mégapixels.

Ce niveau de résolution permet de représenter les deux directions principales de la zone d'observation avec environ 1000 points. Cela engendre une discrétisation spatiale d'au moins 200 micromètres pour des particules photoluminescentes au moins 2 fois plus petites.

Très préférentiellement encore, le dispositif de prise de vue a une profondeur de champ supérieure ou égale à 50 micromètres.

Afin d'améliorer encore la netteté des clichés il convient d'adapter la profondeur de champ du dispositif de prise de vue à la dimension de la nappe plane de lumière d'épaisseur ep et des dimensions caractéristiques D des particules photoluminescentes.

Selon un autre mode de réalisation avantageux, le dispositif de prise de vue comprend au moins un filtre optique passe-bande sur la bande chromatique C3C4.

Ainsi, on ne sélectionne que la bande chromatique émettrice des particules photoluminescentes. On écarte ainsi les sources lumineuses parasites dues par exemple au réfléchissement de la source de lumière émettrice ou du rayonnement lumineux d'autres particules présentes dans la nappe d'eau (impuretés) qui émettent sur une autre bande chromatique.

Très avantageusement, le dispositif de prise de vue comprend un capteur numérique présentant une sensibilité d'au moins 12 bits, préférentiellement d'au moins 14 bits.

Finalement, on excite avec une énergie définie des particules photoluminescentes qui sont en nombre réduit dans la nappe d'eau et qui ne restituent qu'une partie de l'énergie émettrice. Le niveau de lumière capté par le dispositif de prise de vue est donc faible et afin d'améliorer le rapport signal sur bruit, il est avantageux d'avoir une forte sensibilité optique. Dans le cas d'un capteur numérique, cela se traduit par une étendue dynamique (rapport entre la « full well capacity » et le readout noise) d'au moins 5000.

Selon un autre mode de réalisation spécifique, le dispositif d'exposition comprend un moyen d'obturation de la lumière apte à laisser passer la lumière sur un temps d'exposition TE inférieur à 2 microsecondes sur une première position et à empêcher la lumière de passer sur la seconde position..

Le rôle du moyen d'obturation est de figer le champ de déplacement des particules photoluminescentes sur le cliché en fonction de la résolution du dispositif de prise de vue. Ainsi avec une particule photoluminescente de diamètre D d'environ 100 micromètres pour une résolution du dispositif de prise de vue supérieur à 1 mégapixels correspondant à environ 1000 pixels par dimension de la zone d'observation, et une longueur de la zone d'observation d'au moins 200 millimètres, la particule photoluminescente peut parcourir au plus 100 micromètres pendant la prise du cliché sans avoir à changer de pixel. Pour une vitesse moyenne de 20 m/s, cela revient à définir un temps d'exposition TE inférieur à 5 microsecondes. Plus le temps d'exposition est faible, plus le cliché est net facilitant la corrélation entre les divers clichés. Une astuce consiste à utiliser la durée TL du pulse de la source de lumière comme temps d'exposition TE du dispositif optique ce qui nécessite d'une part d'employer des particules photoluminescentes ayant un temps de relaxation très bref ce qui correspond à la durée nécessaire à la particule pour restituer une partie de l'énergie reçue. Généralement dans le cas des particules fluorescentes, ce temps de relaxation à l'excitation lumineuse est quasi nulle, la particule rayonnant immédiatement à l'excitation lumineuse reçue. De plus, si la mesure est faite dans l'obscurité, la génération du pulse de lumière émise par les particules constitue un Dirac dans le signal de lumière captée par la zone photosensible du dispositif de prise de vue.

Selon un mode de réalisation particulier, le moyen de détection du passage du pneumatique du dispositif de synchronisation comprend au moins deux couples émetteur/récepteur de cellules sensibles photoélectriques disposées le long de la trajectoire de l'enveloppe pneumatique à des positions figées par rapport à la zone d'observation.

Spécifiquement, les cellules sensibles ont une technologie comprise dans le groupe comprenant photoélectrique, magnétique, électromagnétique et optique.

En effet, lorsque l'enveloppe pneumatique est portée par un véhicule terrestre circulant à une vitesse V sur une trajectoire spécifique, il convient de synchroniser le déclenchement du système de mesure avec le passage de l'enveloppe pneumatique sur la zone d'observation. A cette fin, le système comprend au moins la mesure temporelle du passage de l'enveloppe pneumatique au droit de deux positions connues par rapport à la zone d'observation. Celles-ci sont suffisamment éloignées de la zone d'observation, pour qu'un calculateur évalue la vitesse de déplacement du véhicule ou/et son accélération et puisse estimer l'instant T1 de l'arrivée de l'enveloppe pneumatique sur la zone d'observation. Ainsi, cette estimation devient le temps de référence pour déclencher les divers dispositifs du système de mesure pour la prise des clichés de la zone d'observation. Tout type de signaux de détection du passage de l'enveloppe pneumatique devant les cellules peut être employé tant que ceux-ci ne nécessitent que peu de traitement pour identifier les instants Ti de passage du véhicule avec une précision importante.

Selon un autre mode de réalisation particulier, le hublot se comportant comme une poutre a une rigidité à la flexion supérieure à $75 \ 10^9$ N.mm$^2$, préférentiellement supérieure à $150 \ 10^9$ N.mm$^2$.

En considérant que le hublot se présente comme une structure équivalente de type poutre ayant un module élastique E exprimé en MPa et un moment quadratique I exprimée en mm$^4$ lié à une forme géométrique équivalente et homogène déterminée par une base b et une hauteur h. La rigidité à la flexion de la poutre représentée par le produit du module élastique par le moment quadratique détermine une caractéristique intrinsèque de la poutre équivalente représentant le hublot. Cette rigidité assure que la flèche maximale de la poutre lorsque que celle-ci est soumise à une charge ponctuelle P correspondant à celle portée par l'ensemble monté d'un véhicule de transport terrestre, située au milieu de la longueur L de la poutre est inférieure à 0,1 millimètre lorsque les extrémités de la poutre sont en appui simple. Cette faible flèche assure que la hauteur he de la nappe d'eau est constante et assure un positionnement précis de la tranche lumineuse par rapport à la surface du polyèdre en contact avec la nappe d'eau.

Selon une première alternative, la seconde partie du dispositif optique positionnée au-dessus de la première surface du hublot comprend un polyèdre homogène optiquement, présentant une dimension principale selon une direction D perpendiculaire à la normale N de la première surface du hublot. Le polyèdre comprend une deuxième surface plane présentant une normale orthogonale à la normale N et la direction D et la première surface plane présentant une normale orthogonale à la normale N et la direction D qui est agencée pour recevoir la tranche surfacique de lumière perpendiculairement.

Dans ce premier mode de réalisation, le polyèdre est situé au-dessus de la première surface du hublot. La présence de deux faces parallèles de ce polyèdre assure une transmission de la tranche surfacique de lumière issue du générateur de nappe au travers de ce polyèdre sans réflexion. La transmission d'énergie est donc optimale entre la sortie de la première partie du dispositif optique et la nappe d'eau malgré des indices optiques différents entre l'air, l'eau et le polyèdre. Pour cela, il est primordial que la tranche surfacique de lumière du générateur de nappe arrive perpendiculaire sur l'une des faces parallèles du polyèdre.

La tranche surfacique de lumière est acheminée jusqu'au polyèdre par des éléments optiques de type miroirs généralement.

Selon une seconde alternative, la seconde partie du dispositif optique positionné au-dessus de la première surface du hublot comprend un polyèdre homogène optiquement, présentant une dimension principale selon une direction D perpendiculaire à la normale N de la première surface du hublot. Le polyèdre comprend la deuxième surface plane présentant une normale orthogonale à la normale N et la direction D et la première surface plane présentant une normale orthogonale à D et parallèle à la normale N qui est agencée pour recevoir la tranche surfacique de lumière perpendiculairement. Le polyèdre du dispositif comprend un miroir plan formant un angle de 45° par rapport aux normales des première et deuxième surfaces planes.

Dans ce second mode de réalisation, on génère une tranche surfacique de lumière qui est perpendiculaire à la première surface plane du polyèdre. Par réflexion sur un miroir placé à 45 degrés, la tranche de lumière arrive perpendiculairement à la deuxième surface plane du polyèdre en contact avec la nappe d'eau. Ces angles d'incidence particuliers sur la première et deuxième surface plane ainsi que sur le miroir assurent une transmission maximale de l'énergie lumineuse issue de la première partie du dispositif optique vers la nappe d'eau.

Spécifiquement, le polyèdre est situé en aval de la zone d'observation par rapport à la trajectoire de l'enveloppe pneumatique et sa dimension principale est perpendiculaire à la trajectoire de l'enveloppe pneumatique.

Très spécifiquement, le polyèdre est situé en aval de la zone d'observation par rapport à la trajectoire de l'enveloppe pneumatique et sa dimension principale est inclinée et située latéralement par rapport à la trajectoire de l'enveloppe pneumatique.

Le polyèdre des deux premiers modes de réalisation doit être situé en aval de la zone d'observation par rapport à la trajectoire de l'enveloppe pneumatique dans le but d'éclairer la nappe d'eau située en aval de l'enveloppe pneumatique. Il est possible de le positionner perpendiculairement ou parallèlement ou de façon oblique par rapport à la trajectoire T. L'écartement latéral de ce polyèdre par rapport à la trajectoire de l'enveloppe pneumatique peut être intéressant dans le cadre où les sillons ne sont pas dans le sens de la trajectoire mais transverses par exemple. Dans le second mode de réalisation, la perturbation générée par le polyèdre est moindre que dans le premier mode de réalisation.

Selon un troisième mode de réalisation, la seconde partie du dispositif optique positionnée en dessous de la première surface du hublot comprend un polyèdre homogène optiquement présentant un indice optique $n_H$. Le polyèdre comprend la première et la deuxième surface plane. La première surface plane est agencée pour recevoir la tranche surfacique de lumière sous une incidence $\alpha$ par rapport à sa normale, $\alpha$ étant inférieur à 10 degrés. La deuxième surface plane faisant un angle $\beta$ avec la première surface plane. La première surface plane est confondue avec la première surface du hublot. L'angle $\beta$ est fonction de l'indice optique $n_H$ du polyèdre et de l'indice $n_E$ de l'eau.

C'est une autre alternative pour propager la tranche surfacique de lumière au travers du dispositif optique vers la nappe d'eau. Pour cela il faut employer un prisme ayant une forme spécifique. En effet, la deuxième surface plane du dispositif optique doit former un angle $\beta$ avec la normale N de la première surface plane du dispositif optique. Cet angle $\beta$ est déterminé par l'angle critique de réfraction selon la relation suivante :

-

$$n_H * \sin(\beta) = n_E$$

Ainsi en projetant la tranche surfacique de lumière issue de la première partie du dispositif optique faisant une faible variation angulaire $\alpha$ par rapport à la normale à la première surface plane du prisme, on émet en sortie du prisme homogène d'indice optique $n_H$ une première nappe plane de lumière dans la nappe d'eau. En modifiant l'angle de projection de la tranche surfacique de lumière de la première partie du dispositif optique, on obtient une variation de l'inclinaison de la nappe plane de lumière émise dans la nappe d'eau permettant d'obtenir des zones de sélection différentiantes de la nappe d'eau.

Ce troisième mode de réalisation ne génère pas d'obstacle à l'écoulement de l'eau devant l'enveloppe pneumatique par la présence d'un polyèdre en saillie par rapport à la première surface du hublot. Cependant, on obtient une nappe plane de lumière dans la nappe d'eau qui a une épaisseur plus importante que la tranche surfacique de lumière de la première partie du dispositif optique. Afin de minimiser l'élargissement de la nappe plane de lumière dans la nappe d'eau provoquée en outre par les différentes longueurs d'onde de la lumière polychromatique, il est préférable d'employer une source de lumière monochromatique comme généralement dans le cas d'une émission laser.

L'invention porte deuxièmement sur un procédé d'obtention du champ de vitesse dans une nappe d'eau en employant un système de mesure selon la première invention comprenant les étapes suivantes :

- Lancer l'enveloppe pneumatique sur une trajectoire en condition de roulage à l'instant T0 en minimisant l'intensité lumineuse externe ;

- Evaluer la vitesse V de l'enveloppe pneumatique sur la trajectoire en amont de la zone d'observation ;

- Evaluer le temps d'arrivée T1 de l'enveloppe pneumatique à l'entrée de la zone d'observation par rapport à la trajectoire;

- Générer à l'instant T2 au moins un premier chemin de lumière comprenant une première nappe plane de lumière dans la bande chromatique C1 C2 d'épaisseur ep au sein de la nappe d'eau permettant aux particules luminescentes d'émettre dans la bande monochromatique C3 C4. sur au moins une partie du temps de traversée de la zone d'observation par l'enveloppe pneumatique

- Lancer un premier cliché du dispositif de prise de vue à l'instant T3 par rapport à l'arrivée prévue de l'enveloppe pneumatique à l'entrée de la zone d'observation à l'instant T1.

- Déclencher le premier déclenchement du dispositif d'exposition à l'instant T4 après l'instant T2 de génération d'un premier chemin de lumière par le dispositif optique pour une durée TE ;

- Lancer au moins un deuxième cliché du dispositif de prise de vue à l'instant T5 après la fin de la durée TE d'exposition du premier cliché ;

- Déclencher au moins un deuxième déclenchement du dispositif d'exposition à l'instant T6 après l'instant T5 de lancement du au moins second cliché pour une durée TE ;

- Effectuer une corrélation d'images entre le premier cliché et le au moins deuxième cliché.

Ce procédé permet de générer au moins deux clichés de la zone d'observation au moment du passage de l'enveloppe pneumatique dans la zone d'observation. Cette méthode permet d'obtenir des images nettes de particules présentes dans cette zone d'observation. Cela permet d'évaluer le champ de vitesse de la zone d'observation par analyse des deux clichés. Bien entendu, selon la cinématique de l'enveloppe pneumatique et de sa trajectoire, il convient d'adapter les déclenchements des divers dispositifs et de déterminer les diverses durées associées. Ces opérations sont effectuées par le dispositif de synchronisation.

Selon un mode de réalisation préférentiel, le roulage de l'enveloppe pneumatique est effectué avec un éclairement moyen de la zone d'observation inférieur à 1 lux, préférentiellement inférieur à 0,1 lux.

En effet, le nombre de particules émettrices de lumière étant limité, il convient de réduire l'intensité lumineuse extérieure au système pour améliorer le rapport signal/bruit des clichés. Pour cela, la réalisation des essais de nuit par exemple ou dans un espace couvert où la luminosité est contrôlable minimise la génération de lumière, en particulier dans la bande chromatique C3C4, issue des sources extérieures au système. De plus si on souhaite employer comme dispositif d'exposition le pulse de la source de lumière combinée à des particules à faible temps de relaxation comme par exemple des particules fluorescentes, il convient aussi de limiter les sources de lumière parasites pouvant exciter les particules ou activer la zone photosensible du dispositif de prise de vue.

Selon un mode de réalisation avantageux, le procédé d'obtention comprend une étape complémentaire :

- Générer à l'instant T7, après la durée d'exposition TE du premier cliché et avant le au moins deuxième déclenchement du dispositif d'exposition à l'instant T6, au moins un deuxième chemin de lumière comprenant une seconde nappe plane de lumière dans la bande chromatique C1 C2 d'épaisseur ep au sein de la nappe d'eau permettant aux particules luminescentes d'émettre dans la bande monochromatique C3 C4 sur au moins une partie du temps de traversée de la zone d'observation par l'enveloppe pneumatique,

Si on emploie des particules photoluminescentes ayant une durée d'émission courte, inférieure à la période T entre deux clichés du dispositif de prise de vue, proportionnelle à la durée TL du pulse de lumière par exemple, il est probable qu'après la période T suivant le premier cliché, les particules n'émettent plus ou pas assez de lumière par rapport au bruit extérieur pour pouvoir les distinguer nettement. Ce sera le cas des particules fluorescentes ou phosphorescentes ayant des temps de relaxation brefs. A ce moment, la génération d'une seconde tranche de lumière sur la même zone d'observation est nécessaire pour augmenter l'intensité lumineuse des particules. Bien entendu, dans le cas du laser avec une durée de pulse très faible, le réglage de la durée entre les deux impulsions du laser sur la période T entre les deux clichés permet de mutualiser les dispositifs du système de mesure le rendant plus convivial.

**Description brève des dessins**

L'invention sera mieux comprise à la lecture de la description qui va suivre dans le cas d'une application à des véhicules de tourisme. Bien entendu l'extension à des pneumatiques de type camionnette et poids lourds est tout à fait envisageable moyennant éventuellement un dimensionnement adéquat du système de mesure pour s'adapter aux dimensions et spécificités d'usage de ce type de pneumatique. Cette application est donnée uniquement à titre d'exemple illustratif et faite en se référant aux figures annexées dans lesquelles :

- La Fig 1 est une vue d'ensemble du système de mesure du champ de vitesse dans une nappe d'eau selon le troisième mode de réalisation de l'invention.
- La Fig 2 présente une empreinte de l'aire de contact d'une enveloppe pneumatique.
- Les Fig 3a et Fig 3b sont les variantes en matière de mode de réalisation de la seconde partie du dispositif optique.
- La Fig 4 est un descriptif de la première partie du dispositif optique.
- La Fig 5 présente un synoptique du procédé d'obtention du champ de vitesses dans une nappe d'eau.
- La Fig 6 présente un résultat du champ de vitesse dans la nappe d'eau obtenu au niveau d'un sillon d'un pneumatique.

**Description détaillée de modes de réalisation**

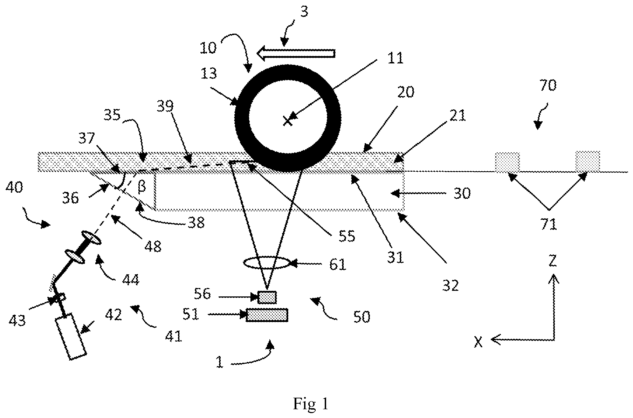

La Fig 1 présente une vue générale du système d'obtention du champ de vitesse dans une nappe d'eau selon le troisième mode de réalisation de l'invention. Ce système 1 est arrangé avec une enveloppe pneumatique 10 ayant une bande de roulement 13 en contact avec le sol dans un état gonflé et monté sur une jante en rotation autour de l'axe naturel de rotation 11. Ce pneumatique 10 se déplace selon une trajectoire indiquée par la flèche 3 qui est en mouvement par rapport aux autres éléments du système de mesure 1.

Pour estimer l'instant d'arrivée du pneumatique 10 dans une zone d'observation 55 du système de mesure 1, le système est équipé d'un dispositif de synchronisation 70. Ce système de synchronisation comprend des cellules sensibles 71 situées en amont du passage du pneumatique 10 dans la zone d'observation 55. Ces cellules sensibles 71, au nombre de 2 au minimum sont distantes les unes des autres de manière précise permettant d'évaluer la vitesse de l'enveloppe pneumatique 10 sur la trajectoire 3 voire l'accélération de l'enveloppe pneumatique 10 si celle-ci ne se déplace pas à vitesse constante. Bien entendu, la trajectoire 3 de l'enveloppe pneumatique 10 peut être en ligne droite ou en courbe afin d'évaluer selon ces conditions différenciantes, les champs de vitesse de la nappe d'eau 20 au passage de l'enveloppe pneumatique 10. Ce système de synchronisation 70 comprend des moyens de calculs et des moyens de communication permettant de récupérer et traiter les signaux reçus des cellules sensibles 71. Ce système de synchronisation 70 est en communication avec les autres éléments du système de mesure afin de piloter le dispositif optique 40, le dispositif d'exposition 60, pouvant comprendre l'obturateur mécanique 61, et le dispositif de prise de vue 50.

Le système de mesure 1 comprend une nappe d'eau 20 d'une hauteur he comprise entre 1 et 8 millimètres permettant de mettre en oeuvre les phénomènes hydrodynamiques de l'interaction entre l'enveloppe pneumatique 10 et la nappe d'eau 20. Cette nappe d'eau 20 située sur la trajectoire 3 de l'enveloppe pneumatique 10 comprend des particules 21 photoluminescentes disséminées dans la nappe d'eau 20. Ces particules 21 ont une densité voisine de celle de l'eau afin que leur répartition soit homogène au sein de la nappe d'eau 20. Leur concentration est fixée afin qu'elles soient suffisamment présentes dans les clichés dans le but d'obtenir un champ de vitesse précis de la nappe d'eau 20 sans que ces particules modifient l'écoulement naturel de l'eau. Bien entendu, les particules 21 n'ont aucune interaction physique ou chimique avec les molécules d'eau qui pourraient modifier l'écoulement de l'eau. De plus, leur dimension comprise entre un et une centaine de micromètres est adaptée aux dimensions caractéristiques L des éléments du schéma de creux de la bande de roulement 13 que l'on souhaite étudier. Enfin, ces particules 21 photoluminescentes ont un spectre d'activation chromatique qui est dissocié de leur spectre d'émission chromatique. Dans notre cas ce sont des particules de PMMA dopées à la rhodamine qui sont fluorescentes, de diamètre de l'ordre de 20 micromètres et de densité de l'ordre de $1.19g/cm^3$. La concentration de particules employée ici est de l'ordre de $100g/m^3$. Leur spectre d'activation a une longueur d'onde centrée autour de 542 nanomètres tandis que la longueur d'onde du spectre d'émission est située à 584 nanomètres.

Le système de mesure 1 comprend aussi un hublot 30 transparent situé sous la nappe d'eau 20 dont la dimension principale selon la direction X est supérieure à la dimension des détails du schéma de creux du pneumatique 10 que l'on souhaite étudier, dans notre cas c'est-à-dire ici de l'ordre de 500 millimètres. Ce hublot 30 constitué d'un bloc homogène en PMMA (acronyme anglais de PolyMéthAcrylate de Méthyle.) comprend une première surface 31 en contact avec la nappe d'eau 20 et une deuxième surface 32 qui est ici parallèle. La planéité relative des surfaces 31 et 32 assure une netteté des clichés de visualisation. Le parallélisme entre les deux surfaces 31 et 32 permet de s'affranchir d'une étape de calibration des clichés pris par un dispositif de prise de vue 50. La distance entre les deux surfaces du hublot est ici de l'ordre de 200 millimètres. Ainsi la rigidité de flexion du hublot, par sa géométrie et son matériau, un module d'Young de l'ordre de 3250 MPa et un coefficient de poisson de 0.39, assure un déplacement maximal au milieu du hublot sous une charge statique de 800 kg inférieure au dixième de millimètre ce qui assure la précision dans la hauteur de la nappe d'eau 20 au passage de l'enveloppe pneumatique 10 sur la zone d'observation 55.

Le système de mesure 1 comprend un dispositif de prise de vue 50 couplé à un obturateur mécanique 61. Le dispositif de prise de vue 50 définit la zone d'observation 55 au niveau de la nappe d'eau 20 qui doit être adaptée au détail géométrique du schéma de creux de l'enveloppe pneumatique 10 que l'on souhaite étudier. Dans notre cas, pour des détails géométrique de l'ordre de 15 millimètres, l'écoulement dans un sillon longitudinal d'une enveloppe pneumatique de type été, la zone d'observation correspond à un rectangle dont les deux côtés font environ 200 millimètres. La profondeur de champ suffisante assure la netteté du cliché au niveau de la zone d'observation 55 et la dimension de la zone d'observation 55 est-elle contrôlée par l'objectif choisi ainsi que par la distance entre le dispositif de prise de vue et la zone d'observation.

Ce dispositif de prise de vue 50 de type appareil photo ou caméra à double trames par exemple ou caméra rapide permet de prendre des clichés espacés dans le temps d'une période T courte qui est adaptée à la vitesse V de l'enveloppe pneumatique 10. Dans le cas d'un dispositif de type sCMOS de LaVision, la période T entre les deux clichés est de l'ordre de 150 microsecondes ce qui est bien adaptée à une vitesse V de l'ordre de 80 km/h. Ce dispositif de prise de vue 50 comprend une zone photosensible 51 qui est active qu'à la lumière contenue dans la bande chromatique d'émission des particules 21. Pour cela, l'utilisation d'un filtre chromatique 56 ne laissant passer que la bande d'émission des particules 21 est préférable. Le dispositif d'exposition 60 pourrait comprendre ici l'obturateur 61 contrôlant le temps d'exposition TE de la lumière de la zone photosensible 51 du dispositif de prise de vue 50. Cet obturateur 61 est de type mécanique, électronique ou électromécanique qui est adapté à la durée d'exposition TE. Ce temps d'exposition TE assure la netteté du cliché. Comme les particules 21 sont animées d'une vitesse en lien avec la vitesse V de l'enveloppe pneumatique 10, la netteté du cliché dépendra nécessairement du TE mais aussi de la résolution de la zone photosensible 51 du dispositif de prise de vue 50. Idéalement, la résolution de la zone photosensible est d'environ 1000 pixels répartis uniformément le long de chacune des dimensions de la zone d'observation 55. Enfin, le dispositif de prise de vue 50 est disposé perpendiculairement à la première surface plane 31 du hublot 30 afin de maximiser la quantité de lumière capturée par le dispositif de prise de vue 50. Ici on utilise une caméra sCMOS de LaVision, de résolution 5,5 Mégapixels, équipée d'un capteur numérique de 16 bits de sensibilité permettant de prendre les deux clichés nécessaires à la méthode espacés de 120 ns minimum. Le temps d'exposition de la caméra est compris entre 15 microsecondes et 10 millisecondes.

Enfin, le système de mesure 1 comprend un dispositif optique 40 comprenant une première partie 41 générant la tranche surfacique 48 de lumière d'activation et une deuxième partie 35 générant une nappe plane de lumière 39 dans la nappe d'eau 20. Dans notre cas, le dispositif optique 40 est situé en aval de la zone d'observation 55 et perpendiculairement à la trajectoire 3 de l'enveloppe pneumatique 10.

La première partie 41 du dispositif optique 40 comprend une source lumineuse 42 de type pulsé à double impulsions fournissant une énergie de 200mJ par impulsion sur une durée TL courte. Cette énergie d'activation est idéalement concentrée sur la bande chromatique d'activation des particules 21. Ici dans le cas d'un laser Nd :YAG, c'est une source monochromatique centrée sur la longueur d'onde de 532 nanomètres. Le temps TL du pulse du laser est de l'ordre de 10 nanosecondes et il est possible de régler la période entre les deux impulsions laser en fonction de la vitesse V de l'enveloppe pneumatique 10 à l'entrée de la zone d'observation 55. Dans le cas d'une source polychromatique, la première partie 41 du dispositif optique 40 est équipée d'un filtre chromatique 43 filtrant au moins la bande chromatique d'émission des particules 21. Idéalement, c'est un filtre passe bande limité à la bande d'activation des particules 21. Ensuite, la première partie 41 du dispositif optique 40 comprend un générateur de nappe 44 capable de construire une tranche surfacique de lumière 48 dans la gamme chromatique d'activation des particules 21.

Ici, le dispositif optique 40 inclut le dispositif d'exposition 60. En effet, la source de lumière pulsée produit des éclairements de la durée TL des impulsions. Les deux impulsions font l'exposition car les particules fluorescentes 21 réémettent immédiatement leur signal lumineux suite à l'excitation et ce dans un temps très bref. Ainsi, l'obturateur mécanique 61 sera toujours sur la position d'ouverture pour cette configuration.

La deuxième partie 35 du dispositif optique 40 comprend un polyèdre 38 constitué d'un matériau homogène d'indice optique $n_H$. Ce polyèdre 38 comprend une première surface plane 36 recevant la tranche surfacique de lumière 48 et une seconde surface plane 37 en contact avec la nappe d'eau 20. La planéité des surfaces 36 et 37 assure que la tranche de lumière 48 sera transmise ou réfléchie sans être diffractée lors de la traversée de la deuxième partie 35 du dispositif optique 40 ce qui aurait pour incidence d'éclairer un plus grand volume que la seule nappe plane de lumière 39 souhaitée au sein de la nappe d'eau 20.

Dans ce troisième mode de réalisation du système de mesure 1, la première surface plane 36 du polyèdre 38 du dispositif optique 40 fait un angle de β degrés par rapport à la seconde surface plane 37 du polyèdre 38. L'angle β est défini à l'aide des indices optiques de l'eau, soit un indice optique $n_E$ de 1,33, et du matériau constitutif du polyèdre 38. Ici, le polyèdre 38 du dispositif optique 40 est intégré dans la continuité du hublot 30 formant un seul ensemble homogène optiquement. Le matériau de cet élément est du PMMA présentant un indice optique $n_H$ de 1,493. Ainsi l'angle β est de 66 degrés. Il suffit alors de projeter la tranche surfacique 48 sur la première surface 36 du polyèdre 38 avec un angle d'incidence de quelques degrés, inférieur à 5 degrés, par rapport à la normale de la première surface plane 36 pour que la lumière soit transmise dans la nappe d'eau 20 sous la forme d'une nappe plane de lumière 39. Celle-ci suivra une trajectoire faisant un angle de sortie par rapport à la deuxième surface plane 37 du polyèdre 38 inférieur à 6 degrés. La modification angulaire de l'angle incidence de la tranche surfacique de lumière 48 influence l'angle de sortie de la nappe plane de lumière 39. Ainsi, en modifiant l'angle d'incidence précisément, il est possible d'éclairer des couches successives de la nappe d'eau 20 par le biais de ce polyèdre 38 particulier.

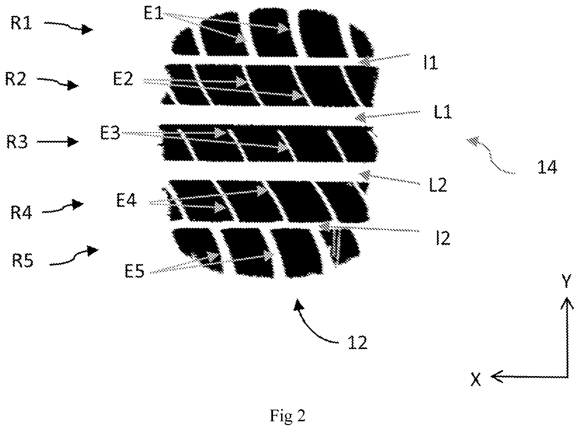

La Fig 2 présente l'empreinte au sol, nommée aire de contact 12, d'un pneumatique 10 d'un ensemble monté dans son état gonflé monté à l'arrêt sur un sol en l'absence d'une nappe d'eau. Il s'agit ici d'une enveloppe pneumatique 10 de type été de la gamme Primacy 3 pour une dimension 205/55R16 montée sur une roue tôle 6.5J16 à une certaine condition de charge statique Z appliquée à l'ensemble monté et une pression nominale de gonflage suivant la norme ETRTO. L'enveloppe pneumatique 10 est ici équipée radialement extérieurement par rapport à l'axe naturel de rotation 11 d'une bande de roulement 13 présentant un schéma de creux 14 permettant la circulation de l'eau sous l'enveloppe pneumatique 10 lors de la traversée par l'enveloppe pneumatique 10 d'un sol recouvert d'une nappe d'eau 20. L'aire de contact 12 est délimitée par une surface fermée fictive contenant l'ensemble des éléments constitutifs de la bande de roulement 13 en contact avec le sol. Dans ce cas l'aire de contact 12 présente une longueur de l'ordre de 150 millimètres selon la direction X et une largeur de l'ordre de 180 millimètres selon la direction Y.

Les parties sombres traduisent le contact direct entre le sol et la gomme de la bande de roulement 13. Les parties claires traduisant l'absence de ce contact intime entre le sol et la bande de roulement 13. Le schéma de creux 14 représente schématiquement l'ensemble des parties claires de cette image en se limitant à la surface fermée délimitant l'aire de contact 12. Ce schéma de creux comprend ici un ensemble de sillons longitudinaux 11, 12, L1 et L2. D'une part on note deux sillons principaux L1 et L2 de largeur La1 et La2 élevée de l'ordre de 15 millimètres. On note aussi la présence de deux sillons secondaires 11 et 12 situés extérieurement par rapport aux sillons principaux L1 et L2. Ces sillons secondaires ont des largeurs la1 et la2 bien plus étroites que les sillons principaux de l'ordre de 5 millimètres. Enfin, les sillons longitudinaux L1, L2, 11 et 12 séparent la bande de roulement 13 en contact avec le sol en 5 éléments R1, R2, R3, R4 et R5, appelés ribs, dont la longueur selon la direction X est ici sensiblement équivalente à celle de l'aire de contact 12. Chaque rib, R1, R2, R3, R4 et R5, présente ici des entailles transversales E espacées régulièrement le long de la direction X. Ces entailles, indexées par rapport à l'identification du rib, sont orientées principalement selon la direction Y. Sur les ribs centraux R2, R3 et R4, ces entailles E ont une épaisseur de l'ordre du millimètre tandis que l'épaisseur des entailles transversales sur les ribs extérieurs R1 et R5 et de l'ordre de 5 millimètres. Ces entailles transversales sont débouchantes dans les sillons longitudinaux à l'exception d'une extrémité des entailles transversales E3 du rib central R3. Ainsi, le schéma de creux 14 de la bande de roulement 13 a, dans ce cas, des dimensions caractéristiques L comprises entre 1 millimètre et 150 millimètres. Selon l'élément du schéma de creux que l'on souhaite étudier 11, 12, L1, L2, E1, E2, E3, E4 et E5, on adaptera la zone d'observation 55 du dispositif de prise de vue voire la dimension D des particules 21 présentes dans la nappe d'eau 20.

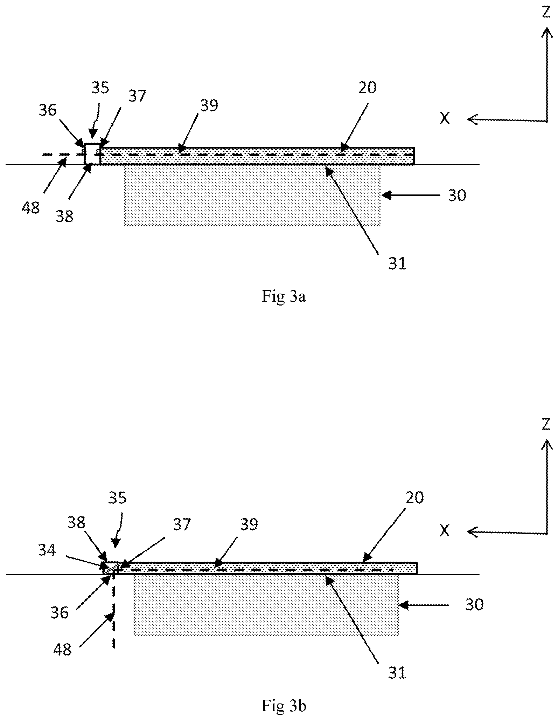

Les Fig 3a et Fig 3b présentent des modes de réalisation particuliers au niveau du dispositif optique 40 et en particulier de la deuxième partie 35 de ce dispositif optique 40 dans le cas où le polyèdre 38 se situe au-dessus de la première surface 31 du hublot 30.

Dans la Fig 3a, le polyèdre 38 qui est un prisme ici présente une première surface plane 36 qui est parallèle à la seconde surface plane 37 du polyèdre 38. L'angle d'incidence de la tranche surfacique de lumière 48 sur la première surface plane 36 est normale ce qui conduit à une transmission optimale de la lumière au travers de cette première surface plane 36. Le polyèdre 38 étant homogène optiquement, aucune déviation des rayons lumineux ne se produit à la traversée du polyèdre 38. Les rayons de lumière arrivent sous une incidence normale sur la seconde surface plane 37 du polyèdre 38. Ainsi, la transmission des rayons lumineux dans la nappe d'eau est optimale, minimisant la perte d'énergie lumineuse et sans déviation des rayons lumineux. Le réglage de la position d'impact de la tranche surfacique de lumière 48 sur la première surface plane 36 du polyèdre 38 assure la génération en sortie de ce polyèdre 38 d'une nappe plane de lumière 39 à une hauteur fixe selon la direction verticale déterminée par rapport à la base de la deuxième surface plane 37 du polyèdre 38 sur le sol. Le polyèdre 38 joue alors un rôle principal d'interface entre la nappe d'eau 20 et l'air pour la transmission de la tranche surfacique de lumière 48 sans déviation de celle-ci. La première partie 41 du dispositif optique 40 permet de générer la tranche surfacique de lumière 48 au-dessus du sol ce qui n'impactera pas l'espace libre de la cavité située sous le hublot.

Dans la Fig 3b, le polyèdre 38 présente une première surface plane 36 qui est perpendiculaire à la seconde surface plane 37 du polyèdre 38. Le polyèdre 38 est équipé d'un miroir 34 plan situé à 45 degrés par rapport aux normales des deux surfaces planes 36 et 37. L'angle d'incidence de la tranche surfacique de lumière 48 se fait sous une incidence normale par rapport à la première surface plane 36 optimisant la transmission de l'énergie lumineuse dans le polyèdre 38 sans déviation de la trajectoire de cette tranche 48. La lumière transmise vient alors rencontrer la face plane du miroir 34 sur une incidence à 45 degrés qui optimisera la transmission énergétique des rayons réfléchies sous une incidence perpendiculaire aux rayons incidents. Ces rayons réfléchis viennent alors rencontrer la deuxième surface plane 37 du polyèdre 38 sous une incidence normale dont la face extérieure est en contact avec la nappe d'eau 20. Cette incidence particulière permet la génération d'une nappe plane de lumière 39 avec un rendement énergétique optimal tout en maîtrisant la direction des rayons dans la nappe d'eau 20. Ce dispositif permet de générer la nappe plane de lumière 39 au-dessus de la surface du sol tout en minimisant les éléments structurels du système de mesure 1 en saillie par rapport au sol selon la direction verticale Z. Ces éléments en saillie étant source de perturbation pour l'écoulement de la nappe d'eau 20 mise en mouvement par le passage de l'enveloppe pneumatique 10.

Dans les Fig 3a et Fig 3b, l'absence de déviation des rayons lumineux permet d'employer une source polychromatique de lumière 42 générant une tranche surfacique de lumière 48 dont l'épaisseur est pilotée par le générateur de nappe 43. Ainsi, on générera au travers de la deuxième partie 35 du dispositif optique 40 une nappe surfacique de lumière 39 d'épaisseur constante en lien avec l'épaisseur de la tranche surfacique de lumière 48.

Dans ces deux modes de réalisation, le polyèdre 38 est situé en aval de la trajectoire 3 du pneumatique 10 de façon orthogonale à la trajectoire 3. Cependant, il est tout à fait envisageable de positionner ce polyèdre 38 parallèlement ou de façon oblique à la trajectoire 3 à une certaine distance de la trajectoire 3 de l'enveloppe pneumatique 10 pour minimiser les effets néfastes de la position de ce polyèdre 38 sur l'écoulement de la nappe d'eau 20. En revanche, plus la nappe plane de lumière 39 est étendue sur une grande surface plus les effets dissipatifs de la propagation de la lumière dans la nappe d'eau 20 seront nombreux ce qui nécessite d'augmenter l'énergie initiale de la source de lumière 42 en conséquence.

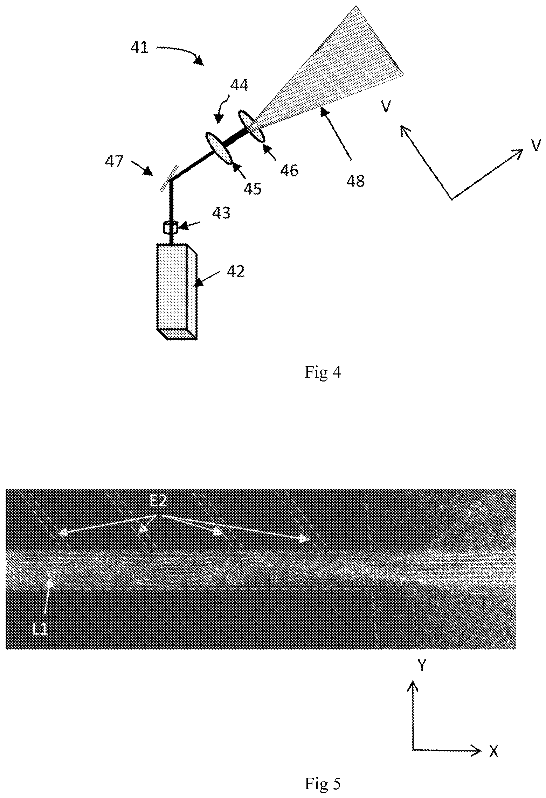

La Fig 4 est une représentation de la première partie 41 du dispositif optique 40 servant à la génération d'une tranche surfacique de lumière 48. Elle comprend une source de lumière 42 émettant une certaine quantité d'énergie sur une durée TL. Cette source 42 produit la lumière excitatrice des particules photoluminescentes 21 d'une certaine quantité énergétique afin de tenir compte de la dissipation de l'énergie qui se produira au sein du système de mesure 1. Idéalement, c'est une source pulsée. Dans le cas d'une source polychromatique, la source est couplée à un filtre chromatique 43 pour extraire la bande chromatique correspondante à la lumière émise par les particules photoluminescentes. Idéalement on filtre toute la bande chromatique à l'exception de la bande chromatique correspondant à la lumière d'activation des particules 21. Ensuite les rayons lumineux passent par un générateur de nappe 44. Ce générateur de nappe 44 comprend une lentille cylindrique divergente 45 afin d'étendre le rayon lumineux entrant pour former un volume de lumière. Située en aval de cette lentille divergente 45 se trouve une lentille sphérique 46 permettant de contenir le volume de lumière dans une nappe d'une certaine épaisseur. Ainsi, à la traversée de ce générateur de nappe 44, une tranche surfacique de lumière 48 est obtenue d'une certaine épaisseur selon des directions U et V.

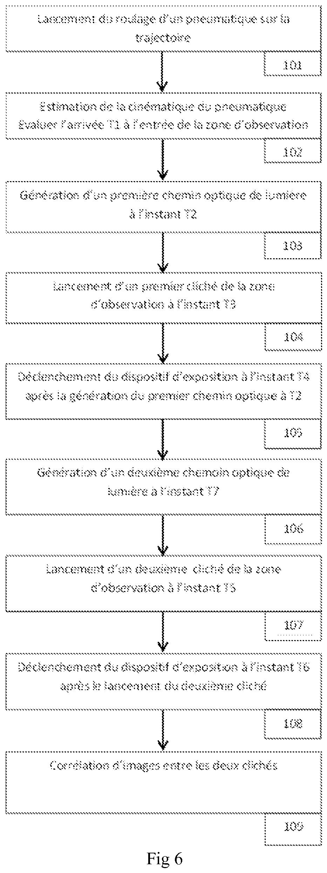

La Fig 6 est un synoptique du procédé d'obtention 100 du champ de vitesse dans une nappe d'eau lors du passage d'une enveloppe pneumatique en condition de roulage sur une chaussée recouverte de la nappe d'eau. La première étape 101 consiste à lancer le roulage de l'enveloppe pneumatique sur une trajectoire prédéterminée, linéique ou courbe, sous conditions cinématiques de type vitesse imposée ou accélération imposée généralement. Lors du parcours sur cette trajectoire, l'enveloppe pneumatique va rencontrer les cellules sensibles du dispositif de synchronisation au nombre d'au moins deux qui permettront d'estimer les conditions cinématiques de roulage de l'enveloppe pneumatique correspondante à la première partie de l'étape 102. Cette information permettra aussi d'évaluer l'instant T1 correspondant à l'entrée de l'enveloppe pneumatique à l'entrée de la zone d'observation du système de mesure ce qui constitue la seconde partie de l'étape 102. Ces opérations sont effectuées en temps réel à l'aide de moyens de calculs dédiés compris dans le dispositif de synchronisation du système de mesure. Le dispositif de synchronisation va alors piloter les dispositifs optique, d'exposition et de prise de vue du système de mesure en prenant en compte l'instant T1 d'entrée de l'enveloppe pneumatique dans la zone d'observation.

Ainsi, selon les caractéristiques du dispositif optique et des particules photoluminescentes du système de mesure, le dispositif de synchronisation va estimer l'instant T2 pour générer un premier chemin optique de la lumière comprenant une nappe plane de lumière dans la nappe d'eau où se situe la zone d'observation et piloter le dispositif optique pour lancer cette action correspondant à l'étape 103. Cet instant T2 peut se situer avant ou après l'instant T1 d'entrée de l'enveloppe pneumatique dans la zone d'observation selon la durée pendant laquelle les particules photoluminescentes de la nappe d'eau émettront de la lumière dans la bande C3C4 avec une énergie suffisante.

Le dispositif de synchronisation va aussi estimer l'instant T3 pour lancer l'acquisition d'un premier cliché par le dispositif de prise de vue et piloter le dispositif de prise de vue pour effectuer cette action à l'instant T3 ce qui correspond à l'étape 104. Selon l'intensité lumineuse au niveau de la zone d'observation au moment où se passe le test, et de la durée de la nappe plane de lumière liée aux propriétés des particules photoluminescentes et des caractéristiques du dispositif de prise de vue, cet instant T3 peut avoir lieu avant ou après la génération de la première nappe plane de lumière. Généralement, dans le cas d'un dispositif optique employant une source laser pulsé avec des particules fluorescentes à temps d'émission bref et une luminosité basse , de l'ordre de 0.1 lux, de la zone d'observation au moment du test, le déclenchement du cliché a lieu avant l'instant T2.

Le dispositif de synchronisation va aussi estimer l'instant T4 de déclenchement du dispositif d'exposition afin de laisser entrer la lumière de la zone d'observation dans le dispositif de prise de vue et en particulier au niveau de sa zone photosensible. Le dispositif de synchronisation va piloter le dispositif d'exposition pour effectuer cette action à l'instant T4 ce qui correspond à l'étape 105. L'obturateur du dispositif d'exposition sera initialement calibré sur un temps d'exposition TE lié aux conditions cinématiques de l'enveloppe pneumatique en particulier la vitesse V au niveau de la zone photosensible. Ce temps TE étant aussi en lien avec la résolution du dispositif de prise de vue. Généralement pour des particules fluorescentes et une source de lumière pulsée de type laser, le dispositif d'exposition correspond aux caractéristiques du pulse de la source de lumière. Le temps du pulse correspond alors au temps d'exposition TE. La relaxation des particules fluorescentes peut être instantanée ne modifiant pas la durée d'exposition TE donnée par le pulse de la source. Dans ce cas particulier, les instants T4 et T2 sont confondus. Le préréglage du temps d'exposition dans ce cas s'effectue en lien avec la vitesse de passage de l'enveloppe pneumatique sur la zone d'observation. Celle-ci peut être définie par les conditions cinématiques du test ou évaluée par le dispositif de synchronisation.

Le dispositif de synchronisation va aussi estimer l'instant T5 pour lancer l'acquisition d'un deuxième cliché par le dispositif de prise de vue et piloter le dispositif de prise de vue pour effectuer cette action à l'instant T5 ce qui correspond à l'étape 107.

Le dispositif de synchronisation va aussi estimer l'instant T6 de déclenchement du dispositif d'exposition afin de laisser entrer la lumière de la zone d'observation dans le dispositif de prise de vue et en particulier au niveau de sa zone photosensible. Le dispositif de synchronisation va piloter le dispositif d'exposition pour effectuer cette action à l'instant T6 ce qui correspond à l'étape 108. Cette étape aura lieu après l'instant T5 correspondant au déclenchement du deuxième cliché par le dispositif de prise de vue. La durée d'exposition TE est comme pour l'étape 105 liée aux conditions cinématiques de l'enveloppe pneumatique et en particulier la vitesse de l'enveloppe pneumatique au moment du passage sur la zone d'observation. Cependant, si on emploie la source de lumière pulsée de type laser comme dispositif d'exposition avec des particules fluorescentes à temps de relaxation bref, le dispositif de synchronisation doit piloter le lancement d'une deuxième tranche surfacique de lumière par le dispositif optique correspondant à l'étape optionnelle 106. Le dispositif de synchronisation doit d'abord estimer l'instant T7 pour effectuer cette action qui doit correspondre au moins à la fermeture de l'exposition de la zone photosensible du dispositif de prise de vue pour le premier cliché. Dans le cas des particules fluorescentes, cet instant est postérieur à l'instant T5 correspondant au lancement du second cliché par le dispositif de prise de vue. Cependant, cette étape 106 peut aussi être nécessaire si l'intensité lumineuse des particules photoluminescentes, dans le cas de particules phosphorescentes par exemple, décroit sans pour autant être presque nulle. La réactivation de l'émission des cellules photoluminescentes par cette deuxième impulsion d'énergie lumineuse permet d'obtenir un second cliché de qualité. L'instant de génération de ce deuxième chemin optique de la lumière peut alors avoir lieu avant l'instant T7 par rapport au lancement du deuxième cliché tout en étant antérieur à l'instant T4 du déclenchement du dispositif d'exposition associée à la durée TE de cette exposition.

Enfin la dernière étape 109 du processus correspond à une corrélation d'image à partir des clichés obtenus aux étapes précédentes de la zone d'observation. Ici, plusieurs méthodes mathématiques de corrélation d'images peuvent être employées afin de déterminer le déplacement le plus probable des particules présentes dans une zone élémentaire du capteur photosensible entre le premier et le deuxième cliché. Le couplage de cette trajectoire avec la période T entre les deux clichés qui est déterminée par le dispositif de prise de vue permet l'évaluation du champ de vitesses bidimensionnel des particules présentes dans la zone d'observation.

La multiplicité des tests à iso condition permet d'extraire un champ de vitesse moyen en moyennant les champs de vitesse unitaires par exemple. Cela permet d'obtenir une information fiable du champ de vitesse de la zone d'observation dans le creux de la bande de roulement du pneumatique.

La Fig 5 est un résultat du procédé 100 d'obtention du champ de vitesse dans le schéma de creux d'une enveloppe pneumatique superposé au premier cliché et un calque en pointillé gris pour isoler l'aire de contact et les éléments du schéma de creux.

L'enveloppe pneumatique est celle présentée sur la Fig 2 dans un état neuf dans les conditions d'usage suivante. La trajectoire suivie est une ligne droite à une vitesse stabilisée de 60 kilomètre par heure. L'enveloppe pneumatique est montée sur une BMW série 3. L'enveloppe pneumatique est montée sur le train avant du véhicule. Le test a lieu la nuit sous une luminosité inférieure à 0,1 lux. La chaussé au droit de l'enveloppe pneumatique mesurée présente une nappe d'eau d'épaisseur 4 millimètres dans laquelle des particules de PMMA dopées à la rhodamine de diamètre moyen 40 micromètres ont été dispersées. La source de lumière employée est un laser Nd :YAG double impulsions d'une durée TL de 10 nanosecondes.

Le cliché montre le sillon longitudinal L1. Le côté droit du cliché est dirigé vers l'aval de la trajectoire et le côté gauche du cliché correspond à la zone de l'aire de contact. Le champ de vitesse est matérialisé par les petites flèches blanches dont la direction définit la trajectoire linéaire estimée d'une particule photoluminescente entre le premier cliché et le second cliché. L'image de référence correspond au premier cliché.

On observe divers phénomènes hydrodynamiques au travers de ce champ de vitesse. Tout d'abord un front d'onde situé en aval de la trajectoire et notamment au droit du sillon longitudinal. L'écoulement des particules photoluminescentes est parallèle à la trajectoire du pneumatique, l'écoulement est constant sur une certaine longueur ce qui se visualise par des flèches de même longueur .

A l'intérieur du sillon longitudinal L1, l'écoulement des particules est turbulent avec un déplacement moyen des particules en sens opposé à la trajectoire 3 du pneumatique. Le sillon longitudinal L1 sert de guide à un écoulement de l'eau vers l'arrière du pneumatique. Cet écoulement n'est pas laminaire. On note notamment, la présence d'un écoulement dans des entailles transversales E2 débouchantes dans le sillon longitudinale L1

Enfin, l'intensité du champ de vitesses dans le sillon longitudinal est plus chaotique du fait de l'absence d'une direction d'écoulement majoritaire et des turbulences présentes dans l'écoulement.

## Revendications

1. Système de mesure (1) du champ de vitesse dans une nappe d'eau (20) au passage d'une enveloppe pneumatique (10), ladite enveloppe pneumatique (10) étant en condition de roulage suivant une trajectoire (3) comprenant un sommet ayant une bande de roulement (13) dans un état chargé et gonflé en rotation autour d'un axe naturel de rotation (11), présentant sur sa surface externe au niveau de la bande de roulement (13) un creux géométrique (14) de dimension caractéristique L comprise entre 0,1 et 200 millimètres, comprenant :

   - Une nappe d'eau (20) d'épaisseur he comprise entre 1 et 8 millimètres, comprenant des particules (21), inertes dans l'eau, dont la densité est comprise à moins de 30% de la densité de l'eau et dont la dimension caractéristique est D,
   - Un hublot (30) transparent situé sous la nappe d'eau (20) comportant une première surface (31) en contact avec la nappe d'eau (20) , ayant une dimension caractéristique H1 supérieure à 200 millimètres et dont la surface plane moyenne présente une normale N, et une seconde surface (32) dont la surface plane moyenne présente une normale N' faisant un angle à moins de α degrés par rapport la normale N de la première surface, α étant inférieur à 60 degrés, préférentiellement 30 degrés, très préférentiellement 15 degrés ;
   - Un dispositif optique (40) comprenant une première partie (41) comportant une source lumineuse (42),pouvant correspondre au point de départ d'un chemin optique de la lumière, et un générateur de nappe (43) apte à générer une tranche surfacique de lumière (48) dont le spectre lumineux s'étend sur une bande chromatique C1C2; et une seconde partie (35) comprenant une première surface plane (36) agencée pour recevoir la tranche surfacique de lumière (48) et une seconde surface plane (37) en contact avec la nappe d'eau (20) agencée pour émettre une nappe plane de lumière (39) apte à couvrir au moins une partie de la première surface (31) du hublot (30) située en aval de la trajectoire (3) ;

- Un dispositif de prise de vue (50) situé sous le hublot (30), comprenant une zone photosensible (51) à une bande chromatique C3C4, pouvant correspondre au point d'arrivée du chemin optique de la lumière, définissant une zone d'observation (55) au niveau de la nappe d'eau (20) permettant de prendre au moins deux clichés de la zone d'observation (55) espacés d'une période T ;

- Un dispositif d'exposition (60) à la lumière, situé sur le chemin optique de la lumière, pilotant un temps d'exposition TE de la zone photosensible (51) du dispositif de prise de vue (50) ;

- Un dispositif de synchronisation (70) comprenant un moyen de détection du passage du pneumatique (10) sur la trajectoire (3) situé en amont de la trajectoire (3) par rapport au hublot (30), un moyen de calcul apte à évaluer l'instant de l'arrivée de l'enveloppe pneumatique (10) dans la zone d'observation (55), et un moyen de communication pilotant le dispositif optique (40), le dispositif d'exposition (60) et le dispositif de prise de vue (50) ;

**Caractérisé en ce que** les particules (21) sont photoluminescentes ayant un spectre d'activation compris dans la bande chromatique C1C2 et un spectre d'émission dans la bande chromatique C3C4, les dites bandes chromatiques ne se recouvrant pas, **en ce que** la dimension caractéristique D des particules (21) est comprise entre 1 micromètres et 100 micromètres, préférentiellement 10 à 50 micromètres, **en ce que** la concentration des particules (51) dans l'eau est comprise entre de 2,5 et 250 gramme/m$^3$ et **en ce que** le dispositif optique (40) génère une nappe plane de lumière (39) d'épaisseur ep inférieure ou égale à la hauteur he.

2. Système de mesure (1) du champ de vitesse dans une nappe d'eau selon l'une quelconque des revendications précédentes dans lequel la source lumineuse (42) du dispositif optique (40) est pulsé fournissant une énergie minimale de 100 millijoules, de préférence 200 millijoules, très préférentiellement 400 millijoules, dans la bande chromatique C1C2 sur une durée TL.

3. Système de mesure (1) du champ de vitesse dans une nappe d'eau selon l'une quelconque des revendications précédentes dans lequel le générateur de nappe (43) du dispositif optique (40) comprend une lentille cylindrique divergente (44) et une lentille sphérique (45) .

4. Système de mesure (1) du champ de vitesse dans une nappe d'eau selon l'une quelconque des revendications précédentes dans lequel le dispositif de prise de vue (50) est situé perpendiculaire à la première surface (31) du hublot (30).

5. Système de mesure (1) du champ de vitesse dans une nappe d'eau selon l'une quelconque des revendications précédentes dans lequel le dispositif de prise de vue (50) comprend un capteur numérique présentant une sensibilité d'au moins 12 bits, préférentiellement d'au moins 14 bits.

6. Système de mesure (1) du champ de vitesse dans une nappe d'eau selon l'une des revendications précédentes dans lequel le hublot (30), se comportant comme une poutre, a une rigidité à la flexion supérieure à $75.10^9 N.mm^2$, préférentiellement supérieure à $150 \ 10^9 N.mm^2$.

7. Système de mesure (1) du champ de vitesse dans une nappe d'eau selon l'une des revendications précédentes dans lequel la seconde partie (35) du dispositif optique (40) positionné au-dessus de la première surface (31) du hublot (30) comprend un polyèdre (38) homogène optiquement, présentant une dimension principale selon une direction D perpendiculaire à la normale N de la première surface (31) du hublot (30), ledit polyèdre (38) comprend la deuxième surface plane (37) présentant une normale orthogonale à la normale N et la direction D et la première surface plane (36) présentant une normale orthogonale à la normale N et la direction D et étant agencée pour recevoir la tranche surfacique de lumière (48) perpendiculairement.

8. Système de mesure (1) du champ de vitesse dans une nappe d'eau selon l'une des revendications 1 à 6 dans lequel la seconde partie (35) du dispositif optique (40) positionné au-dessus de la première surface (31) du hublot (30) comprend un polyèdre (38) homogène optiquement, présentant une dimension principale selon une direction D perpendiculaire à la normale N de la première surface (31) du hublot (30), ledit polyèdre (38) comprend la deuxième surface plane (37) présentant une normale orthogonale à la normale N et la direction D et la première surface (36) présentant une normale orthogonale à D et parallèle à la normale N et étant agencée pour recevoir la tranche surfacique de lumière (48) perpendiculairement, le polyèdre (38) du dispositif optique (40) comprend un miroir plan formant une angle de 45° par rapport aux normales des première et deuxième surfaces (36, 37) planes.

9. Système de mesure (1) du champ de vitesse dans une nappe d'eau selon l'une des revendications 1 à 6 dans lequel, la seconde partie (35) du dispositif optique (40) positionné en dessous de la première surface (31) du hublot (30) comprenant un polyèdre (38) homogène optiquement présentant un indice optique $n_H$, ledit polyèdre (38) comprenant la première (36) et la deuxième (37) surfaces planes, la première surface plane (36) étant agencée pour recevoir la tranche surfacique de lumière (48) sous une incidence $\alpha$ par rapport à sa normale, $\alpha$ étant inférieur à 10 degrés, la deuxième surface plane (37) faisant un angle $\beta$ avec la première surface plane (36), la dite deuxième surface plane (37) étant confondue avec la première surface (31) du hublot (30), l'angle $\beta$ est fonction de l'indice optique $n_H$ du polyèdre (38) et de l'indice $n_E$ de l'eau.

10. Procédé d'obtention (100) du champ de vitesse dans une nappe d'eau en employant un système de mesure (1) selon l'une quelconque des revendications 1 à 9 comprenant les étapes suivantes :

    - Lancer une enveloppe pneumatique (10) sur une trajectoire (3) en condition, de roulage à l'instant T0 en minimisant l'intensité lumineuse externe ;
    - Estimer la vitesse V de l'enveloppe pneumatique (10) sur la trajectoire (3) en amont de la zone d'observation (55) ;
    - Evaluer le temps d'arrivée T1 de l'enveloppe pneumatique (10) à l'entrée de la zone d'observation (55) par rapport à la trajectoire (3) ;
    - Générer à l'instant T2 au moins un premier chemin optique de la lumière comprenant une première nappe plane (39) de lumière dans la bande chromatique C1 C2 d'épaisseur ep au sein de la nappe d'eau (20) permettant aux particules (21) photoluminescentes d'émettre dans la bande monochromatique C3 C4. sur au moins une partie du temps de traversée de la zone d'observation (55) par l'enveloppe pneumatique (10) ;
    - Lancer un premier cliché du dispositif de prise de vue (50) à l'instant T3 par rapport à l'arrivée prévue de l'enveloppe pneumatique (10) à l'entrée de la zone d'observation (55) à l'instant T1.
    - Déclencher un premier déclenchement du dispositif d'exposition (60) à l'instant T4 après l'instant T2 de génération du premier chemin de lumière pour une durée TE ;

    - Lancer au moins un deuxième cliché du dispositif de prise de vue (50) à l'instant T5 après la fin de la durée TE d'exposition du premier cliché ;
    - Déclencher au moins un deuxième déclenchement du dispositif d'exposition (60) à l'instant T6 après l'instant T5 de lancement du au moins un deuxième cliché pour une durée TE ;
    - Effectuer une corrélation d'image entre le premier cliché et le au moins un deuxième cliché.

11. Procédé d'obtention (100) du champ de vitesse dans une nappe d'eau selon la revendication précédente dans lequel, les particules (21) photoluminescentes ayant une durée d'émission inférieure à la période T du dispositif de prise de vue (50) entre les deux clichés, le procédé (100) comprend une étape complémentaire :

    - Générer à l'instant T7, après la durée d'exposition TE du premier cliché et avant le au moins deuxième déclenchement du dispositif d'exposition (60) à l'instant T6, au moins un deuxième chemin de lumière comprenant une seconde nappe plane de lumière (39) dans la bande chromatique C1 C2 d'épaisseur ep au sein de la nappe d'eau (20) permettant aux particules (21) photoluminescentes d'émettre dans la bande monochromatique C3 C4 sur au moins une partie du temps de traversée de la zone d'observation (55) par l'enveloppe pneumatique (10).

## Patentansprüche

1. System zum Messen (1) des Geschwindigkeitsfelds in einer Wasserschicht (20) beim Durchgang eines Luftreifens (10), wobei sich der Luftreifen (10) in einem Fahrzustand gemäß einer Bahn (3) befindet, einen Scheitel mit einer Lauffläche (13) in einem belasteten und aufgeblasenen Zustand in Drehung um eine natürliche Drehachse (11) beinhaltet, auf seiner Außenoberfläche im Bereich der Lauffläche (13) einen geometrischen Hohlraum (14) mit einer charakteristischen Abmessung L, die zwischen 0,1 und 200 Millimeter beträgt, aufweist, beinhaltend:

    - eine Wasserschicht (20) mit einer Dicke he zwischen 1 und 8 Millimetern, die Partikel (21) beinhaltet, die in Wasser inert sind, deren Dichte weniger als 30 % der Dichte des Wassers beträgt und deren charakteristische Abmessung D ist,
    - ein transparentes Sichtfenster (30), das sich unter der Wasserschicht (20) befindet, umfassend eine erste Oberfläche (31) in Kontakt mit der Wasserschicht (20), die eine charakteristische Abmessung H1 von größer als 200 Millimeter besitzt und deren mittlere ebene Oberfläche eine Normale N aufweist, und eine zweite Oberfläche (32), deren mittlere ebene Oberfläche eine Normale N' aufweist, die mit Bezug auf die Normale N der ersten Oberfläche einen Winkel von weniger als $\alpha$ Grad bildet, wobei $\alpha$ kleiner als 60 Grad, vorzugsweise 30 Grad, sehr bevorzugt 15 Grad ist;

- eine optische Vorrichtung (40), beinhaltend einen ersten Teil (41), umfassend eine Lichtquelle (42), die dem Startpunkt eines optischen Pfads des Lichts entsprechen kann, und einen Schichterzeuger (43), der dazu fähig ist, einen flächigen Lichtstreifen (48) zu erzeugen, dessen Lichtspektrum sich über ein chromatisches Band C1C2 erstreckt; und einen zweiten Teil (35), beinhaltend eine erste ebene Oberfläche (36), die dazu eingerichtet ist, den flächigen Lichtstreifen (48) zu empfangen, und eine zweite ebene Oberfläche (37) in Kontakt mit der Wasserschicht (20), die dazu eingerichtet ist, eine ebene Lichtschicht (39) zu emittieren, die dazu fähig ist, mindestens einen Teil der ersten Oberfläche (31) des Sichtfensters (30), der sich stromabwärts auf der Bahn (3) befindet, abzudecken;

- eine Aufnahmevorrichtung (50), die sich unter dem Sichtfenster (30) befindet, einen Bereich (51) beinhaltet, der gegenüber einem chromatischen Band C3C4 lichtempfindlich ist, dem Ankunftspunkt des optischen Pfads des Lichts entsprechen kann, einen Beobachtungsbereich (55) im Bereich der Wasserschicht (20) definiert und es gestattet, mindestens zwei Aufnahmen des Beobachtungsbereichs (55) zu machen, die um einen Zeitraum T voneinander beabstandet sind;

- eine Belichtungsvorrichtung (60), die sich auf dem optischen Pfad des Lichts befindet und eine Belichtungszeit TE des lichtempfindlichen Bereichs (51) der Aufnahmevorrichtung (50) steuert;

- eine Synchronisierungsvorrichtung (70), beinhaltend ein Mittel zum Detektieren des Durchgangs des Reifens (10) auf der Bahn (3), das sich mit Bezug auf das Sichtfenster (30) stromaufwärts auf der Bahn (3) befindet, ein Rechenmittel, das dazu fähig ist, den Zeitpunkt der Ankunft des Luftreifens (10) in dem Beobachtungsbereich (55) abzuschätzen, und ein Kommunikationsmittel, das die optische Vorrichtung (40), die Belichtungsvorrichtung (60) und die Aufnahmevorrichtung (50) steuert;

**dadurch gekennzeichnet, dass** die Partikel (21) photolumineszent sind, ein in dem chromatischen Band C1C2 enthaltenes Aktivierungsspektrum und ein Emissionsspektrum in dem chromatischen Band C3C4 besitzen, wobei sich die chromatischen Bänder nicht überlappen, dass die charakteristische Abmessung D der Partikel (21) zwischen 1 Mikrometer und 100 Mikrometer, vorzugsweise 10 bis 50 Mikrometer, beträgt, dass die Konzentration der Partikel (51) im Wasser zwischen 2,5 und 250 Gramm/m$^3$ beträgt und dass die optische Vorrichtung (40) eine ebene Lichtschicht (39) mit einer Dicke ep kleiner als oder gleich der Höhe he erzeugt.

2. System zum Messen (1) des Geschwindigkeitsfelds in einer Wasserschicht nach einem beliebigen der vorhergehenden Ansprüche, wobei die Lichtquelle (42) der optischen Vorrichtung (40) gepulst ist und eine Mindestenergie von 100 Millijoule, vorzugsweise 200 Millijoule, sehr bevorzugt 400 Millijoule, in dem chromatischen Band C1C2 über eine Dauer TL bereitstellt.

3. System zum Messen (1) des Geschwindigkeitsfelds in einer Wasserschicht nach einem beliebigen der vorhergehenden Ansprüche, wobei der Schichterzeuger (43) der optischen Vorrichtung (40) eine divergierende zylindrische Linse (44) und eine sphärische Linse (45) beinhaltet.

4. System zum Messen (1) des Geschwindigkeitsfelds in einer Wasserschicht nach einem beliebigen der vorhergehenden Ansprüche, wobei sich die Aufnahmevorrichtung (50) senkrecht zu der ersten Oberfläche (31) des Sichtfensters (30) befindet.

5. System zum Messen (1) des Geschwindigkeitsfelds in einer Wasserschicht nach einem beliebigen der vorhergehenden Ansprüche, wobei die Aufnahmevorrichtung (50) einen digitalen Sensor beinhaltet, der eine Empfindlichkeit von mindestens 12 Bit, vorzugsweise mindestens 14 Bit, aufweist.

6. System zum Messen (1) des Geschwindigkeitsfelds in einer Wasserschicht nach einem beliebigen der vorhergehenden Ansprüche, wobei das Sichtfenster (30), das sich wie ein Balken verhält, eine Biegesteifigkeit von größer als $75.10^9$ N.mm$^2$, vorzugsweise von größer als $150 \, 10^9$ N.mm$^2$, aufweist.

7. System zum Messen (1) des Geschwindigkeitsfelds in einer Wasserschicht nach einem beliebigen der vorhergehenden Ansprüche, wobei der zweite Teil (35) der optischen Vorrichtung (40), der über der ersten Oberfläche (31) des Sichtfensters (30) positioniert ist, einen optisch homogenen Polyeder (38) beinhaltet, der eine Hauptabmessung gemäß einer Richtung D aufweist, die zu der Normalen N der ersten Oberfläche (31) des Sichtfensters (30) senkrecht ist, wobei der Polyeder (38) die zweite ebene Oberfläche (37), die eine Normale orthogonal zu der Normalen N und der Richtung D aufweist, und die erste ebene Oberfläche (36), die eine Normale orthogonal zu der Normalen N und der Richtung D aufweist und dazu eingerichtet ist, den flächigen Lichtstreifen (48) senkrecht zu empfangen, beinhaltet.

8. System zum Messen (1) des Geschwindigkeitsfelds in einer Wasserschicht nach einem der Ansprüche 1 bis 6, wobei der zweite Teil (35) der optischen Vorrichtung (40), der über der ersten Oberfläche (31) des Sichtfensters (30) positioniert ist, einen optisch homogenen Polyeder (38) beinhaltet, der eine Hauptabmessung gemäß einer Richtung D aufweist, die zu der Normalen N der ersten Oberfläche (31) des Sichtfensters (30) senkrecht ist, wobei der Polyeder (38) die zweite ebene Oberfläche (37), die eine Normale orthogonal zu der Normalen N und der Richtung D aufweist, und die erste Oberfläche (36), die eine Normale orthogonal zu D und parallel zu der Normalen N aufweist und dazu eingerichtet ist, den flächigen Lichtstreifen (48) senkrecht zu empfangen, beinhaltet, wobei der Polyeder (38) der optischen Vorrichtung (40) einen ebenen Spiegel beinhaltet, der mit Bezug auf die Normalen der ersten und der zweiten ebenen Oberfläche (36, 37) einen Winkel von 45° bildet.

9. System zum Messen (1) des Geschwindigkeitsfelds in einer Wasserschicht nach einem der Ansprüche 1 bis 6, wobei der zweite Teil (35) der optischen Vorrichtung (40), der unter der ersten Oberfläche (31) des Sichtfensters (30) positioniert ist, einen optisch homogenen Polyeder (38) beinhaltet, der einen Brechungsindex $n_H$ aufweist, wobei der Polyeder (38) die erste (36) und die zweite (37) ebene Oberfläche beinhaltet, wobei die erste ebene Oberfläche (36) dazu eingerichtet ist, den flächigen Lichtstreifen (48) unter einem Einfallswinkel $\alpha$ mit Bezug auf ihre Normale zu empfangen, wobei $\alpha$ kleiner als 10 Grad ist, wobei die zweite ebene Oberfläche (37) einen Winkel $\beta$ mit der ersten ebenen Oberfläche (36) bildet, wobei die zweite ebene Oberfläche (37) mit der ersten Oberfläche (31) des Sichtfensters (30) zusammenfällt, wobei der Winkel $\beta$ von dem Brechungsindex $n_H$ des Polyeders (38) und dem Index $n_E$ des Wassers abhängt.

10. Verfahren zum Erhalten (100) des Geschwindigkeitsfelds in einer Wasserschicht durch Verwendung eines Messsystems (1) nach einem beliebigen der Ansprüche 1 bis 9, beinhaltend die folgenden Schritte:

   - Lancieren eines Luftreifens (10) auf eine Bahn (3) in einem Fahrzustand zu einem Zeitpunkt T0, unter Minimierung der externen Lichtintensität;
   - Schätzen der Geschwindigkeit V des Luftreifens (10) auf der Bahn (3) stromaufwärts des Beobachtungsbereichs (55) ;
   - Abschätzen der Ankunftszeit T1 des Luftreifens (10) am Eintritt in den Beobachtungsbereich (55) mit Bezug auf die Bahn (3);
   - Erzeugen, zu dem Zeitpunkt T2, mindestens eines ersten optischen Pfads des Lichts, der eine erste ebene Lichtschicht (39) in dem chromatischen Band C1 C2 mit einer Dicke ep innerhalb der Wasserschicht (20) beinhaltet, die es den photolumineszenten Partikeln (21) gestattet, während mindestens eines Teils der Durchgangszeit des Luftreifens (10) durch den Beobachtungsbereich (55) in dem monochromatischen Band C3 C4 zu emittieren;
   - Lancieren einer ersten Aufnahme der Aufnahmevorrichtung (50) zu dem Zeitpunkt T3 mit Bezug auf die vorhergesehene Ankunft des Luftreifens (10) am Eintritt in den Beobachtungsbereich (55) zu dem Zeitpunkt T1.
   - Auslösen einer ersten Auslösung der Belichtungsvorrichtung (60) zu dem Zeitpunkt T4 nach dem Zeitpunkt T2 des Erzeugens des ersten Lichtpfads für eine Dauer TE;
   - Lancieren mindestens einer zweiten Aufnahme der Aufnahmevorrichtung (50) zu dem Zeitpunkt T5 nach dem Ende der Belichtungsdauer TE der ersten Aufnahme;
   - Auslösen mindestens einer zweiten Auslösung der Belichtungsvorrichtung (60) zu dem Zeitpunkt T6 nach dem Zeitpunkt T5 des Lancierens der mindestens einen zweiten Aufnahme für eine Dauer TE;
   - Durchführen einer Bildkorrelation zwischen der ersten Aufnahme und der mindestens einen zweiten Aufnahme.

11. Verfahren zum Erhalten (100) des Geschwindigkeitsfelds in einer Wasserschicht nach dem vorhergehenden Anspruch, wobei die photolumineszenten Partikel (21) eine Emissionsdauer aufweisen, die kleiner als der Zeitraum T der Aufnahmevorrichtung (50) zwischen den zwei Aufnahmen ist, wobei das Verfahren (100) einen folgenden Zusatzschritt beinhaltet:

   - Erzeugen, zu dem Zeitpunkt T7, nach der Belichtungsdauer TE der ersten Aufnahme und vor der mindestens einen zweiten Auslösung der Belichtungsvorrichtung (60) zu dem Zeitpunkt T6, mindestens eines zweiten Lichtpfads, der eine zweite ebene Lichtschicht (39) in dem chromatischen Band C1 C2 mit einer Dicke ep innerhalb der Wasserschicht (20) beinhaltet, die es den photolumineszenten Partikeln (21) gestattet, während mindestens eines Teils der Durchgangszeit des Luftreifens (10) durch den Beobachtungsbereich (55) in dem monochromatischen Band C3 C4 zu emittieren.

**Claims**

1. System (1) for measuring the velocity field in a sheet of water (20) during the passage of a tyre casing (10), the said tyre casing (10) being in a condition of rolling along a trajectory (3), comprising an apex having a tread (13) in a filled and inflated state, in rotation about a natural axis of rotation (11), and having a geometrical indentation (14) with a characteristic dimension L of between 0.1 and 200 millimetres on its external surface level with the tread (13), comprising:

   - a sheet of water (20) with a thickness he of between 1 and 8 millimetres, comprising particles (21) that are inert in water, the density of which is less than 30% of the density of water and the characteristic dimension of which is D;
   - a transparent window (30) located under the sheet of water (20), having a first surface (31) in contact with the sheet of water (20), which has a characteristic dimension H1 greater than 200 millimetres and the average plane surface of which has a normal N, and a second surface (32), the average plane surface of which has a normal N' making an angle less than $\alpha$ degrees with respect to the normal N of the first surface, $\alpha$ being less than 60 degrees, preferably 30 degrees, very preferably 15 degrees;
   - an optical device (40) comprising a first part (41) having a light source (42), capable of corresponding to the starting point of an optical path of the light, and a sheet generator (43) capable of generating a two-dimensional slice of light (48), the light spectrum of which extends over a chromatic band C1C2; and a second part (35) comprising a first plane surface (36) arranged to receive the two-dimensional slice of light (48), and a second plane surface (37) in contact with the sheet of water (20) and arranged to emit a plane sheet of light (39) capable of covering at least a part, located downstream of the trajectory (3), of the first surface (31) of the window (30);
   - an imaging device (50) located under the window (30), comprising a zone (51) photosensitive to a chromatic band C3C4, capable of corresponding to the arrival point of the optical path of the light, defining an observation zone (55) level with the sheet of water (20) making it possible to take at least two pictures of the observation zone (55), which are spaced apart by a period T;
   - a light exposure device (60), located on the optical path of the light, controlling an exposure time TE of the photosensitive zone (51) of the imaging device (50);
   - a synchronisation device (70) comprising a means for detecting the passage of the tyre (10) on the trajectory (3), which is located upstream of the trajectory (3) with respect to the window (30), a calculation means capable of evaluating the instant of the arrival of the tyre casing (10) in the observation zone (55), and a communication means controlling the optical device (40), the exposure device (60) and the imaging device (50);

   **characterised in that** the particles (21) are photoluminescent, having an activation spectrum contained in the chromatic band C1C2 and an emission spectrum in the chromatic band C3C4, the said chromatic bands not overlapping, **in that** the characteristic dimension D of the particles (21) is between 1 micrometre and 100 micrometres, preferably from 10 to 50 micrometres, **in that** the concentration of the particles (51) in the water is between 2.5 and 250 grams/m$^3$ and **in that** the optical device (40) generates a plane sheet of light (39) with a thickness ep less than or equal to the height he.

2. System (1) for measuring the velocity field in a sheet of water according to any one of the preceding claims, wherein the light source (42) of the optical device (40) is pulsed, delivering a minimum energy of 100 millijoules, preferably 200 millijoules, very preferably 400 millijoules, in the chromatic band C1C2 over a duration TL.

3. System (1) for measuring the velocity field in a sheet of water according to any one of the preceding claims, wherein the sheet generator (43) of the optical device (40) comprises a diverging cylindrical lens (44) and a spherical lens (45).

4. System (1) for measuring the velocity field in a sheet of water according to any one of the preceding claims, wherein the imaging device (50) is located perpendicularly to the first surface (31) of the window (30).

5. System (1) for measuring the velocity field in a sheet of water according to any one of the preceding claims, wherein the imaging device (50) comprises a digital sensor having a sensitivity of at least 12 bits, preferably at least 14 bits.

6. System (1) for measuring the velocity field in a sheet of water according to one of the preceding claims, wherein the window (30), behaving as a beam, has a flexural rigidity of more than 75 10$^9$ N.mm$^2$, preferably more than 150 10$^9$ N.mm$^2$.

7. System (1) for measuring the velocity field in a sheet of water according to one of the preceding claims, wherein the second part (35) of the optical device (40) positioned above the first surface (31) of the window (30) comprises an optically homogeneous polyhedron (38) having a principal dimension along a direction D perpendicular to the normal N of the first surface (31) of the window (30), the said polyhedron (38) comprises the second plane surface (37) having a normal orthogonal to the normal N and the direction D and the first plane surface (36) having a normal orthogonal to the normal N and the direction D and being arranged to receive the two-dimensional slice of light (48) perpendicularly.

8. System (1) for measuring the velocity field in a sheet of water according to one of Claims 1 to 6, wherein the second part (35) of the optical device (40) positioned above the first surface (31) of the window (30) comprises an optically homogeneous polyhedron (38) having a principal dimension along a direction D perpendicular to the normal N of the first surface (31) of the window (30), the said polyhedron (38) comprises the second plane surface (37) having a normal orthogonal to the normal N and the direction D and the first surface (36) having a normal orthogonal to D and parallel to the normal N and being arranged to receive the two-dimensional slice of light (48) perpendicularly, the polyhedron (38) of the optical device (40) comprises a plane mirror forming an angle of 45° with respect to the normals of the first and second plane surfaces (36, 37).

9. System (1) for measuring the velocity field in a sheet of water according to one of Claims 1 to 6, wherein, the second part (35) of the optical device (40) positioned under the first surface (31) of the window (30) comprising an optically homogeneous polyhedron (38) having an optical index $n_H$, the said polyhedron (38) comprising the first (36) and second (37) plane surfaces, the first plane surface (36) being arranged to receive the two-dimensional slice of light (48) at an incidence $\alpha$ with respect to its normal, $\alpha$ being less than 10 degrees, the second plane surface (37) making an angle $\beta$ with the first plane surface (36), the said second plane surface (37) coinciding with the first surface (31) of the window (30), the angle $\beta$ is a function of the optical index $n_H$ of the polyhedron (38) and of the index $n_E$ of water.

10. Method (100) for obtaining the velocity field in a sheet of water by using a measuring system (1) according to any one of Claims 1 to 9, comprising the following steps:

    - launching a tyre casing (10) on a trajectory (3) in a rolling condition at the instant T0 while minimising the external light intensity;
    - estimating the velocity V of the tyre casing (10) on the trajectory (3) upstream of the observation zone (55);
    - evaluating the time T1 of arrival of the tyre casing (10) at the entry of the observation zone (55) with respect to the trajectory (3);
    - at the instant T2, generating at least one first optical path of the light comprising a first plane sheet (39) of light in the chromatic band C1C2 with a thickness ep within the sheet of water (20), making it possible for the photoluminescent particles (21) to emit in the monochromatic band C3C4 over at least a part of the time of crossing of the observation zone (55) by the tyre casing (10);
    - starting a first picture of the imaging device (50) at the instant T3 with respect to the predicted arrival of the tyre casing (10) at the entry of the observation zone (55) at the instant T1;
    - triggering a first triggering of the exposure device (60) at the instant T4 after the instant T2 of generating the first light path for a duration TE;
    - starting at least one second picture of the imaging device (50) at the instant T5 after the end of the exposure duration TE of the first picture;
    - triggering at least one second triggering of the exposure device (60) at the instant T6 after the instant T5 of starting the at least one second picture for a duration picture TE;
    - carrying out an image correlation between the first picture and the at least one second picture.

11. Method (100) for obtaining the velocity field in a sheet of water according to the preceding claim, wherein, the photoluminescent particles (21) having an emission duration less than the period T of the imaging device (50) between the two pictures, the method (100) comprises an additional step:

    - at the instant T7 after the exposure duration TE of the first picture and before the at least one second triggering of the exposure device (60) at the instant T6, generating at least one second light path comprising a second plane sheet of light (39) in the chromatic band C1C2 with a thickness ep within the sheet of water (20), making it possible for the photoluminescent particles (21) to emit in the monochromatic band C3C4 over at least a part of the time of crossing of the observation zone (55) by the tyre casing (10).

Fig 1

Fig 2

Fig 3a

Fig 3b

Fig 4

Fig 5

Fig 6

**EP 3 908 819 B1**

**Documents brevets cités dans la description**

- JP 2005201851 A

- US 4095464 A